# EUROPEAN PATENT APPLICATION

(11) **EP 3 751 393 A1**
(43) Date of publication of application: **16.12.2020**
(21) Application number: 18904853.1
(22) Date of filing: 16.11.2018
(51) Int. Cl.: G06F 3/01, G06F 3/0481, G06F 3/16, G10L 15/22

(54) **INFORMATION PROCESSING DEVICE, INFORMATION PROCESSING SYSTEM, INFORMATION PROCESSING METHOD, AND PROGRAM**

(30) Priority: 09.02.2018 JP 2018022114
(71) Applicant: Sony Corporation, 108-0075 Tokyo (JP)
(72) Inventor: KAWANO, Shinichi, Tokyo 108-0075 (JP); TAKI, Yuhei, Tokyo 108-0075 (JP); IWASE, Hiro, Tokyo 108-0075 (JP)
(74) Representative: 2SPL Patentanwälte PartG mbB
(86) International application number: PCT/JP2018/042411
(87) International publication number: WO 2019/155717

(57) **Abstract**

An apparatus and a method capable of accurately and repeatedly executing processes based on a plurality of user utterances are realized by generating and using an utterance collection list in which the plurality of user utterances is collected. A learning processing unit generates an utterance collection list in which a plurality of user utterances corresponding to a plurality of different processing requests is collected. Further, the generated utterance collection list is displayed on a display unit. The learning processing unit generates an utterance collection list and stores the utterance collection list in a storage unit in a case where a user agrees, a case where it is determined that a plurality of processes corresponding to the user utterances has been successfully executed, a case where a combination of the plurality of user utterances is equal to or larger than a predetermined threshold number of times, a case where it is estimated that the user is satisfied, or other cases.

## Description

### TECHNICAL FIELD

The present disclosure relates to an information processing apparatus, an information processing system, and an information processing method, and a program. More specifically, the present disclosure relates to an information processing apparatus, an information processing system, and an information processing method, and a program that execute a process according to a user utterance.

### BACKGROUND ART

In recent years, there have been increasingly used voice interaction systems that perform voice recognition of user utterances and perform various processes and responses on the basis of the recognition results.

Those voice recognition systems recognize and understand a user utterance input through a microphone and perform a process according to the recognition and understanding.

For example, in a case where a user utters "Show an interesting moving image.", the voice recognition system performs a process of acquiring moving image content from a moving image content providing server and outputting the moving image content to a display unit or a connected television. Alternatively, in a case where the user utters "Turn off the television.", the voice recognition system performs, for example, operation of turning off the television.

A general voice interaction system has, for example, a natural language understanding function such as natural language understanding (NLU), and understands an intent of a user utterance by applying the natural language understanding (NLU) function.

However, for example, in order to cause the voice interaction system to successively perform a plurality of processes, the user needs to perform a plurality of user utterances corresponding to the plurality of processes. For example, an example is as follows.

"Show an interesting moving image."

"Play classical music."

"I want to continue playing the game where I left off yesterday."

"I want to play a game with my friends, so please contact them."

For example, in a case where such successive user utterances are made, it is difficult for the user to immediately confirm whether or not the system can understand and execute all those utterances.

Actually, the user needs to wait for a while after making the utterances to confirm whether or not processes are executed in response to the user utterances on the basis of execution results.

In a case where a process has not been executed, it is necessary to perform a process of repeating the utterance regarding the process that has not been executed, a process of restating the utterance regarding the process, or other processes.

Such a response imposes a heavy burden on the user. Further, an increase in time required for completing the processes is problematic.

A related art that discloses a configuration for securely executing a processing request based on a user utterance is, for example, Patent Document 1 (Japanese Patent Application Laid-Open No. 2007-052397). This document discloses a configuration in which a list of voice commands that can be input to a car navigation system is displayed on a display unit in advance so that a user can input voice commands while viewing the list.

This configuration makes it possible to cause the user to utter a user utterance (command) that the car navigation system can understand. Therefore, it is possible to reduce the possibility of performing a user utterance (command) that the car navigation system cannot understand.

This configuration can match a user utterance with a command registered in a system. However, as described above, in order to cause the configuration to successively execute a plurality of processing requests, the user needs to search a plurality of commands corresponding to a plurality of processes that the user intends from the list. This increases a burden on the user. Further, as a result, a problem of an increase in time required for completing the processes arises.

### CITATION LIST

### PATENT DOCUMENT

Patent Document 1: Japanese Patent Application Laid-Open No. 2007-052397

### SUMMARY OF THE INVENTION

### PROBLEMS TO BE SOLVED BY THE INVENTION

The present disclosure has been made in view of, for example, the above problems, and an object thereof is to provide an information processing apparatus, an information processing system, and an information processing method, and a program capable of executing a process according to a user utterance more securely.

Further, an embodiment of the present disclosure provides an information processing apparatus, an information processing system, and an information processing method, and a program capable of, in a case where a plurality of different processes is collectively executed, securely executing the plurality of processes requested by a user.

### SOLUTIONS TO PROBLEMS

A first aspect of the present disclosure is
an information processing apparatus including
a learning processing unit configured to perform a learning process of a user utterance, in which
the learning processing unit generates an utterance collection list in which a plurality of user utterances corresponding to a plurality of different processing requests is collected.

Further, a second aspect of the present disclosure is
an information processing system including:
a user terminal; and
a data processing server, in which:
   the user terminal includes
   a voice input unit configured to input a user utterance;
   the data processing server includes
   a learning processing unit configured to perform a learning process of the user utterance received from the user terminal; and
   the learning processing unit generates an utterance collection list in which a plurality of user utterances corresponding to a plurality of different processing requests is collected.

Further, a third aspect of the present disclosure is
an information processing method executed in an information processing apparatus, in which:
the information processing apparatus includes a learning processing unit configured to perform a learning process of a user utterance; and
the learning processing unit generates an utterance collection list in which a plurality of user utterances corresponding to a plurality of different processing requests is collected.

Further, a fourth aspect of the present disclosure is
an information processing method executed in an information processing system including a user terminal and a data processing server, in which:
the user terminal executes a voice input process of inputting a user utterance;
the data processing server executes a learning process of the user utterance received from the user terminal; and
an utterance collection list in which a plurality of user utterances corresponding to a plurality of different processing requests is collected is generated in the learning process.

Further, a fifth aspect of the present disclosure is
a program for causing an information processing apparatus to execute information processing, in which:
the information processing apparatus includes a learning processing unit configured to perform a learning process of a user utterance; and
the program causes the learning processing unit to generate an utterance collection list in which a plurality of user utterances corresponding to a plurality of different processing requests is collected.

Note that the program of the present disclosure is, for example, a program that can be provided in a computer-readable format by a storage medium or a communication medium for an information processing apparatus or computer system that can execute various program codes. By providing such a program in a computer-readable format, processing according to the program is realized in the information processing apparatus or computer system.

Other objects, features, and advantages of the present disclosure will be apparent from more detailed description based on embodiments of the present disclosure described later and the accompanying drawings. Note that, in this specification, a system is a logical set configuration of a plurality of apparatuses, and is not limited to a system in which apparatuses having respective configurations are in the same housing.

### EFFECTS OF THE INVENTION

According to a configuration of an embodiment of the present disclosure, an apparatus and a method capable of accurately and repeatedly executing processes based on a plurality of user utterances are realized by generating and using an utterance collection list in which the plurality of user utterances is collected.

Specifically, for example, a learning processing unit generates an utterance collection list in which a plurality of user utterances corresponding to a plurality of different processing requests is collected. Further, the generated utterance collection list is displayed on a display unit. The learning processing unit generates an utterance collection list and stores the utterance collection list in a storage unit in a case where a user agrees, a case where it is determined that a plurality of processes corresponding to the user utterances has been successfully executed, a case where a combination of the plurality of user utterances is equal to or larger than a predetermined threshold number of times, a case where it is estimated that the user is satisfied, or other cases.

With this configuration, an apparatus and a method capable of accurately and repeatedly executing processes based on a plurality of user utterances are realized by generating and using an utterance collection list in which the plurality of user utterances is collected.

Note that the effects described in this specification are merely examples, are not limited, and may have other additional effects.

### BRIEF DESCRIPTION OF DRAWINGS

Fig. 1 illustrates an example of an information processing apparatus that performs a response and a process on the basis of a user utterance.
Fig. 2 illustrates a configuration example and a usage example of an information processing apparatus.
Fig. 3 illustrates a specific configuration example of an information processing apparatus.
Fig. 4 illustrates an example of display data of an information processing apparatus.
Fig. 5 illustrates an example of display data of an information processing apparatus.
Fig. 6 illustrates an example of display data of an information processing apparatus.
Fig. 7 illustrates an example of display data of an information processing apparatus.
Fig. 8 illustrates an example of display data of an information processing apparatus.
Fig. 9 illustrates an example of display data of an information processing apparatus.
Fig. 10 illustrates an example of display data of an information processing apparatus.
Fig. 11 illustrates an example of display data of an information processing apparatus.
Fig. 12 illustrates an example of display data of an information processing apparatus.
Fig. 13 illustrates an example of display data of an information processing apparatus.
Fig. 14 illustrates an example of display data of an information processing apparatus.
Fig. 15 illustrates an example of display data of an information processing apparatus.
Fig. 16 illustrates an example of display data of an information processing apparatus.
Fig. 17 illustrates an example of display data of an information processing apparatus.
Fig. 18 illustrates an example of display data of an information processing apparatus.
Fig. 19 illustrates an example of display data of an information processing apparatus.
Fig. 20 illustrates an example of display data of an information processing apparatus.
Fig. 21 illustrates an example of display data of an information processing apparatus.
Fig. 22 illustrates an example of display data of an information processing apparatus.
Fig. 23 illustrates an example of display data of an information processing apparatus.
Fig. 24 illustrates an example of display data of an information processing apparatus.
Fig. 25 illustrates an example of display data of an information processing apparatus.
Fig. 26 illustrates an example of display data of an information processing apparatus.
Fig. 27 illustrates an example of display data of an information processing apparatus.
Fig. 28 illustrates an example of display data of an information processing apparatus.
Fig. 29 illustrates an example of display data of an information processing apparatus.
Fig. 30 illustrates an example of display data of an information processing apparatus.
Fig. 31 illustrates an example of display data of an information processing apparatus.
Fig. 32 illustrates an example of display data of an information processing apparatus.
Fig. 33 illustrates an example of display data of an information processing apparatus.
Fig. 34 illustrates an example of display data of an information processing apparatus.
Fig. 35 illustrates an example of display data of an information processing apparatus.
Fig. 36 is a flowchart showing a sequence of a process executed by an information processing apparatus.
Fig. 37 is a flowchart showing a sequence of a process executed by an information processing apparatus.
Fig. 38 is a flowchart showing a sequence of a process executed by an information processing apparatus.
Fig. 39 is a flowchart showing a sequence of a process executed by an information processing apparatus.
Fig. 40 is a flowchart showing a sequence of a process executed by an information processing apparatus.
Fig. 41 illustrates configuration examples of an information processing system.
Fig. 42 illustrates a hardware configuration example of an information processing apparatus.

### MODE FOR CARRYING OUT THE INVENTION

Hereinafter, details of an information processing apparatus, an information processing system, and an information processing method, and a program of the present disclosure will be described with reference to the drawings. Note that description will be made according to the following items.
1. Configuration example of information processing apparatus
2. Example of generating display information and utterance collection list output by information processing apparatus
3. Processing example using utterance collection list
4. Other examples of displaying and generating utterance collection list
5. Sequences of processes executed by information processing apparatus
6. Configuration examples of information processing apparatus and information processing system
7. Hardware configuration example of information processing apparatus
8. Summary of configurations of present disclosure

### [1. Configuration example of information processing apparatus]

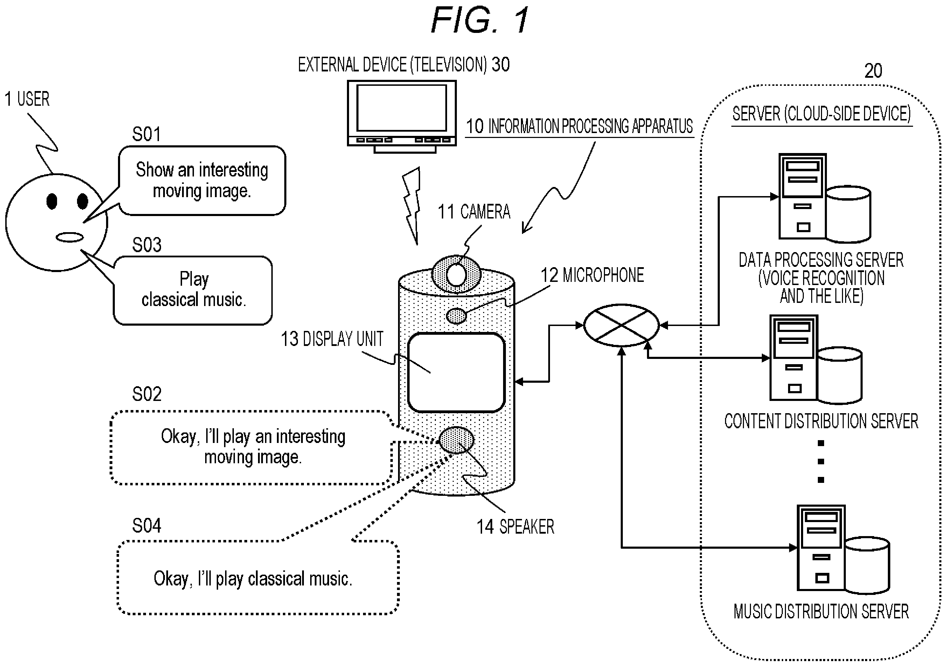

First, a configuration example of an information processing apparatus according to an embodiment of the present disclosure will be described with reference to Fig. 1 and subsequent drawings.

Fig. 1 illustrates a configuration and a processing example of an information processing apparatus 10 that recognizes a user utterance made by a user 1 and performs a process and a response corresponding to the user utterance.

The user 1 makes the following user utterance in step S01.

User utterance = "Show an interesting moving image."

In step S02, the information processing apparatus 10 performs voice recognition of the user utterance and executes a process based on the recognition result.

In the example of Fig. 1, in step S02, the following system utterance is output as a response to the user utterance = "Show an interesting moving image.".

System utterance = "Okay, I'll play an interesting moving image."

Further, the information processing apparatus 10 acquires moving image content from, for example, a content distribution server that is a server 20 in the cloud connected to a network, and outputs the moving image content to a display unit 13 of the information processing apparatus 10 or a nearby external device (television) 30 controlled by the information processing apparatus 10.

Further, the user 1 makes the following user utterance in step S03.

User utterance = "Play classical music."

In step S04, the information processing apparatus 10 performs voice recognition of the user utterance and executes a process based on the recognition result.

In the example of Fig. 1, in step S04, the following system utterance is output as a response to the user utterance = "Play classical music.".

System utterance = "Okay, I'll play classical music."

Further, the information processing apparatus 10 acquires classical music content from, for example, a music distribution server that is the server 20 in the cloud connected to the network, and outputs the classical music content to a speaker 14 of the information processing apparatus 10 or a nearby external device (speaker).

The information processing apparatus 10 in Fig. 1 includes a camera 11, a microphone 12, the display unit 13, and the speaker 14, and is configured to perform voice input/output and image input/output.

The information processing apparatus 10 in Fig. 1 is referred to as, for example, "smart speaker", "agent device", or the like.

Note that a voice recognition process and a semantic analysis process for a user utterance may be performed in the information processing apparatus 10, or may be performed in a data processing server that is one of the servers 20 in the cloud.

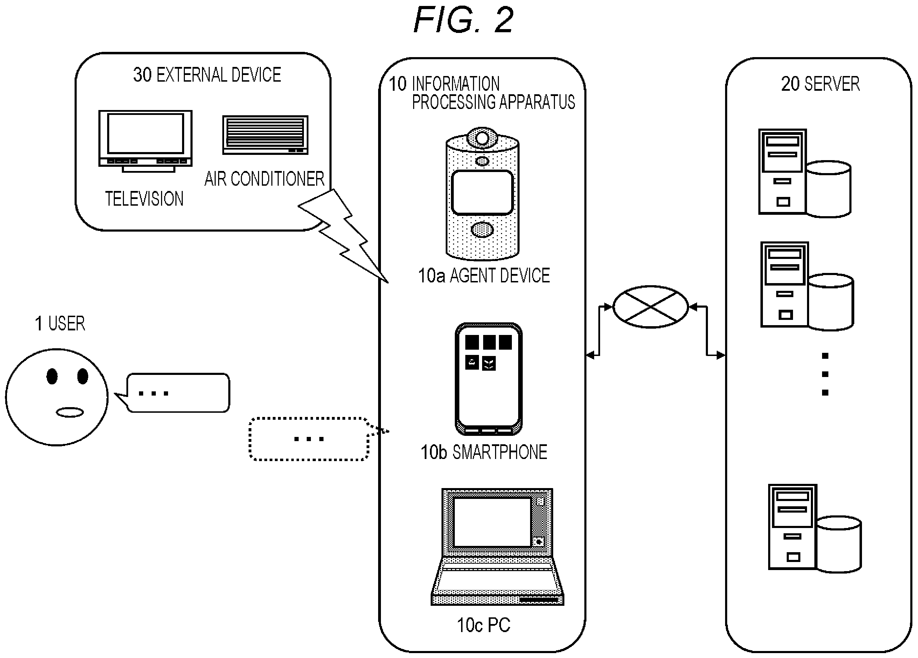

As illustrated in Fig. 2, the information processing apparatus 10 of the present disclosure is not limited to an agent device 10a, and can be various device forms such as a smartphone 10b and a PC 10c.

The information processing apparatus 10 recognizes an utterance of the user 1 and makes a response based on the user utterance, and also, for example, controls an external device 30 such as a television and an air conditioner illustrated in Fig. 2 in response to the user utterance.

For example, in a case where the user utterance is a request such as "Change the channel of the television to 1." or "Set a temperature of the air conditioner to 20 degrees.", the information processing apparatus 10 outputs a control signal (Wi-Fi, infrared light, or the like) to the external device 30 on the basis of a voice recognition result of the user utterance and executes control according to the user utterance.

Note that the information processing apparatus 10 is connected to the server 20 via a network, and can acquire, from the server 20, information necessary for generating a response to the user utterance. Further, as described above, the server may be configured to perform the voice recognition process and the semantic analysis process.

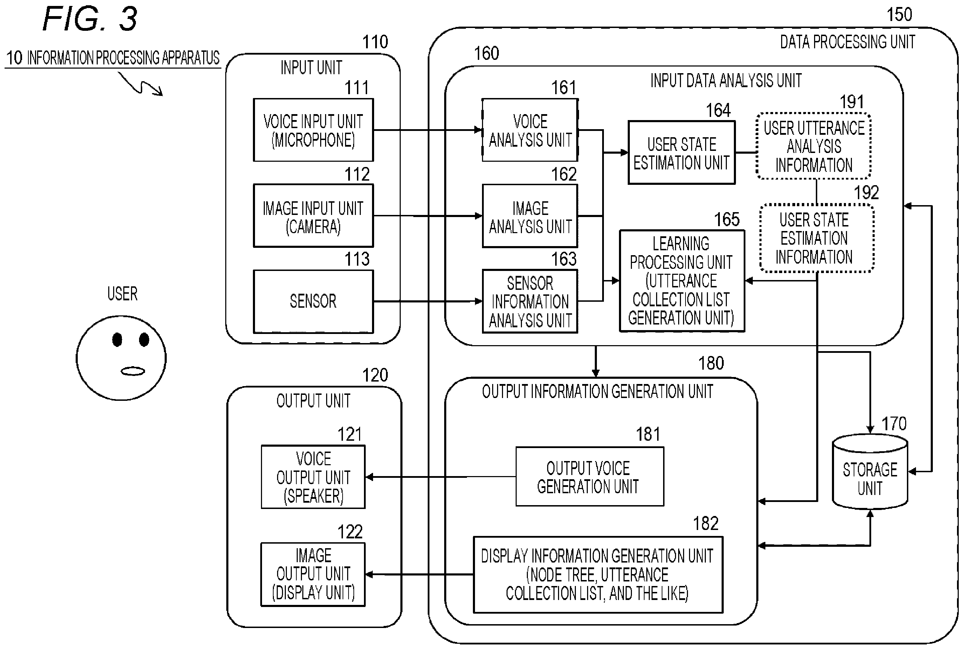

Next, a specific configuration example of the information processing apparatus will be described with reference to Fig. 3.

Fig. 3 illustrates a configuration example of the information processing apparatus 10 that recognizes a user utterance and performs a process and a response corresponding to the user utterance.

As illustrated in Fig. 3, the information processing apparatus 10 includes an input unit 110, an output unit 120, and a data processing unit 150.

Note that, although the data processing unit 150 can be provided in the information processing apparatus 10, a data processing unit of an external server may be used without providing the data processing unit 150 in the information processing apparatus 10. In a case of a configuration using the server, the information processing apparatus 10 transmits input data input from the input unit 110 to the server via a network, receives a processing result of the data processing unit 150 of the server, and outputs the processing result via the output unit 120.

Next, components of the information processing apparatus 10 of Fig. 3 will be described.

The input unit 110 includes a voice input unit (microphone) 111, an image input unit (camera) 112, and a sensor 113.

The output unit 120 includes a voice output unit (speaker) 121 and an image output unit (display unit) 122.

The information processing apparatus 10 includes at least those components.

Note that the voice input unit (microphone) 111 corresponds to the microphone 12 of the information processing apparatus 10 in Fig. 1.

The image input unit (camera) 112 corresponds to the camera 11 of the information processing apparatus 10 in Fig. 1.

The voice output unit (speaker) 121 corresponds to the speaker 14 of the information processing apparatus 10 in Fig. 1.

The image output unit (display unit) 122 corresponds to the display unit 13 of the information processing apparatus 10 in Fig. 1.

Note that the image output unit (display unit) 122 can also be configured by, for example, a projector or the like, or can be configured to use a display unit of a television that is an external device.

The data processing unit 150 is provided in either the information processing apparatus 10 or a server that can communicate with the information processing apparatus 10 as described above.

The data processing unit 150 includes an input data analysis unit 160, a storage unit 170, and an output information generation unit 180.

The input data analysis unit 160 includes a voice analysis unit 161, an image analysis unit 162, a sensor information analysis unit 163, a user state estimation unit 164, and a learning processing unit 165.

The output information generation unit 180 includes an output voice generation unit 181 and a display information generation unit 182.

The display information generation unit 182 generates display data such as a node tree and an utterance collection list. The display data will be described later in detail.

Utterance voice of the user is input to the voice input unit 111 such as a microphone.

The voice input unit (microphone) 111 inputs the input user utterance voice to the voice analysis unit 161.

The voice analysis unit 161 has, for example, an automatic speech recognition (ASR) function, and converts voice data into text data including a plurality of words.

Further, the voice analysis unit 161 executes an utterance semantic analysis process with respect to the text data.

The voice analysis unit 161 has, for example, a natural language understanding function such as natural language understanding (NLU), and estimates an intent of the user utterance and an entity that is a meaningful element (significant element) included in the utterance from the text data.

A specific example will be described. For example, the following user utterance is input.

User utterance = Tell me weather forecast in Osaka for tomorrow afternoon.

The intent of this user utterance is to know weather, and the entity thereof is the following words: Osaka, tomorrow, and afternoon.

When the intent and the entity can be accurately estimated and acquired from the user utterance, the information processing apparatus 100 can perform an accurate process in response to the user utterance.

For example, in the above example, the weather forecast in Osaka for tomorrow afternoon can be acquired and output as a response.

User utterance analysis information 191 acquired by the voice analysis unit 161 is stored in the storage unit 170 and is also output to the learning processing unit 165 and the output information generation unit 180.

Further, the voice analysis unit 161 acquires information (non-verbal information) necessary for a user emotion analysis process based on voice of the user, and outputs the acquired information to the user state estimation unit 164.

The image input unit 112 captures an image of the uttering user and surroundings thereof, and inputs the image to the image analysis unit 162.

The image analysis unit 162 analyzes facial expression, gesture, line-of-sight information, and the like of the user, and outputs the analysis results to the user state estimation unit 164.

The sensor 113 includes, for example, sensors for acquiring data necessary for analyzing a line of sight, a body temperature, a heart rate, a pulse, a brain wave, and the like of the user. Acquisition information from the sensors is input to the sensor information analysis unit 163.

The sensor information analysis unit 163 acquires data such as a line of sight, a body temperature, a heart rate, and the like of the user on the basis of the sensor acquisition information, and outputs the analysis results to the user state estimation unit 164.

The user state estimation unit 164 receives input of the following data, estimates a state of the user, and generates user state estimation information 192:
the analysis result by the voice analysis unit 161, i.e., the information (non-verbal information) necessary for the user emotion analysis process based on the voice of the user;
the analysis results by the image analysis unit 162, i.e., analysis information such as facial expression, gesture, and line-of-sight information of the user; and
the analysis results by the sensor information analysis unit 163, i.e., the data such as a line of sight, a body temperature, a heart rate, a pulse, and a brain wave of the user.

The generated user state estimation information 192 is stored in the storage unit 170 and is also output to the learning processing unit 165 and the output information generation unit 180.

Note that the user state estimation information 192 generated by the user state estimation unit 164 is specifically, for example, estimation information or the like indicating whether or not the user is satisfied, i.e., whether or not the user is satisfied with a process performed on the user utterance by the information processing apparatus.

For example, in a case where it is estimated that the user is satisfied, it is estimated that the process executed by the information processing apparatus in response to the user utterance is correct, i.e., the process has been successfully executed.

The learning processing unit 165 executes a learning process for the user utterance and stores learning data in the storage unit 170. For example, in a case where, when a new user utterance is input or the intent of the user utterance is unknown, the intent is analyzed on the basis of subsequent interaction between the apparatus and the user and the analysis result is obtained, the learning processing unit 165 performs a process of generating learning data in which the user utterance is associated with the intent and storing the learning data in the storage unit 170.

By executing such a learning process, accurate understanding of intents of a large number of user utterances can be gradually achieved.

Further, the learning processing unit 165 also executes a process of generating an "utterance collection list" in which a plurality of user utterances is collected and storing the utterance collection list in the storage unit 170.

The "utterance collection list" will be described later in detail.

Note that not only the analysis result by the voice analysis unit 161 but also the analysis information and estimation information generated by the image analysis unit 162, the sensor information analysis unit 163, and the user state estimation unit 164 are input to the learning processing unit 165.

On the basis of such input information, the learning processing unit 165 grasps, for example, a degree of success of the process executed by the information processing apparatus 10 in response to the user utterance. In a case where the learning processing unit 165 determines that the process has been successfully performed, the learning processing unit 165 executes a process of generating learning data and storing the learning data in the storage unit 170, or other processes.

The storage unit 170 stores the content of the user utterance, the learning data based on the user utterance, the display data to be output to the image output unit (display unit) 122, and the like.

Note that the display data includes a node tree, an utterance collection list, and the like generated by the display information generation unit 182. The data will be described later in detail.

The output information generation unit 180 includes an output voice generation unit 181 and a display information generation unit 182.

The output voice generation unit 181 generates a response to the user on the basis of the user utterance analysis information 191 that is the analysis result by the voice analysis unit 161. Specifically, the output voice generation unit 181 generates a response according to the intent of the user utterance that is the analysis result by the voice analysis unit 161.

Response voice information generated by the output voice generation unit 181 is output via the voice output unit 121 such as a speaker.

The output voice generation unit 181 further performs control of changing a response to be output on the basis of the user state estimation information 192.

For example, in a case where the user is with a dissatisfied and perplexed expression, the output voice generation unit 181 performs a process of executing a system utterance such as "Do you have any problems?", or other processes.

The display information generation unit 182 generates display data to be displayed on the image output unit (display unit) 122, such as a node tree and an utterance collection list.

The data will be described later in detail.

Note that Fig. 3 does not illustrate process execution functions for user utterances, for example, a configuration for performing a moving image acquisition process for playing a moving image and a configuration for outputting the acquired moving image, the configurations having been described above with reference to Fig. 1. However, those functions are also configured in the data processing unit 150.

### [2. Example of generating display information and utterance collection list output by information processing apparatus]

Next, an example of generating display information and an utterance collection list output by the information processing apparatus 10 will be described.

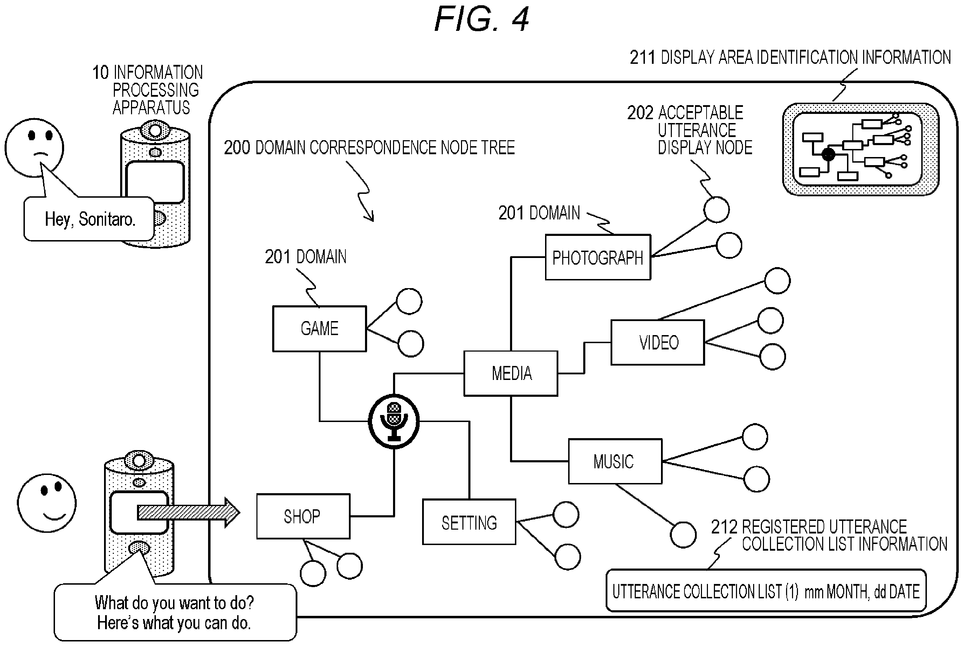

Fig. 4 illustrates an example of display data to be output to the image output unit (display unit) 122 of the information processing apparatus 10.

Note that the image output unit (display unit) 122 corresponds to the display unit 13 of the information processing apparatus 10 in Fig. 1 as described above, but may be configured by, for example, a projector or the like and can also be configured to use a display unit of a television that is an external device.

In the example of Fig. 4, first, the user makes the following user utterance as a call to the information processing apparatus 10.

User utterance = "Hey, *Sonitaro."*

Note that *"Sonitaro"* is a nickname of the information processing apparatus 10.

In response to the call, the information processing apparatus 10 makes the following system response.

System response = "What do you want to do? Here's what you can do."

In the information processing apparatus 10, the output voice generation unit 182 generates the above system response and outputs the system response via the voice output unit (speaker) 121.

In addition to the output of the above system response, the information processing apparatus 10 further displays the display data of Fig. 4 generated by the display information generation unit 182 on the image output unit (display unit) 122.

The display data illustrated in Fig. 4 will be described.

A domain correspondence node tree 200 is tree (tree structure) data that classifies processes executable by the information processing apparatus 10 in response to user utterances according to type (domain) and further shows acceptable user utterance examples for each domain.

In the example of Fig. 4,
a game domain,
a media domain,
a setting domain, and
a shop domain
are set as domains 201, and
a photograph domain,
a video domain, and
a music domain
are further displayed as subdomains of the media domain.

Acceptable utterance display nodes 202 are further set as child nodes of each domain.

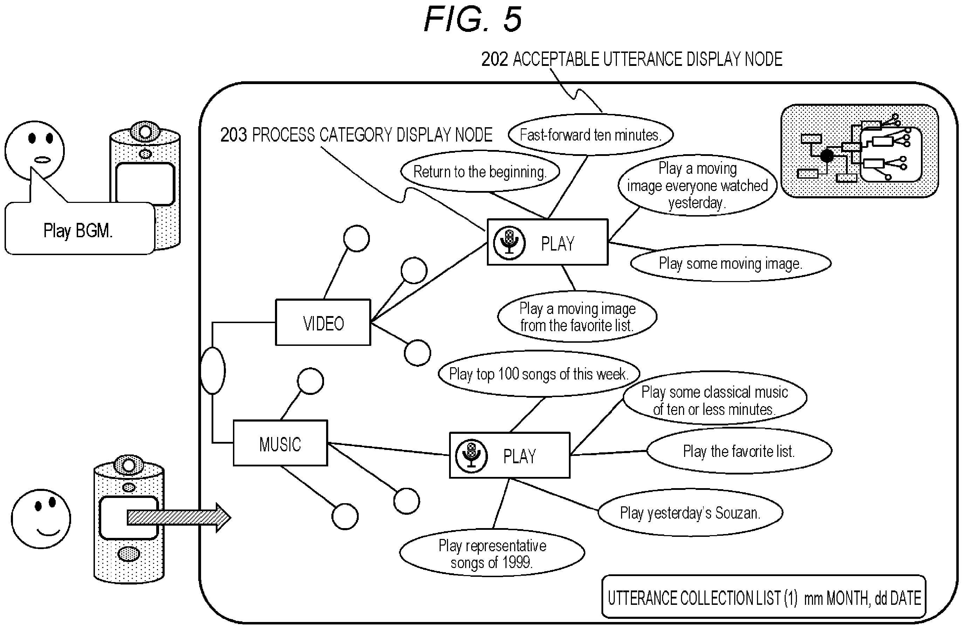

Specific examples of the acceptable utterance display node 202 will be described later with reference to Fig. 5 and subsequent drawings.

The display unit further displays display area identification information 211 in an upper right part. This is information indicating which part of the entire tree the domain correspondence node tree 200 displayed on the display unit corresponds to.

The display unit further displays registered utterance collection list information 212 in a lower right part. This is list data of an utterance collection list recorded on the storage unit 170 of the information processing apparatus 10.

The utterance collection list is a list in which a series of a plurality of different user utterances is collected. For example, the utterance collection list is used in a case where the information processing apparatus 10 is requested to successively perform two or more processes.

The utterance collection list will be described later in detail.

The state in Fig. 4 shifts to a state in Fig. 5.

As illustrated in Fig. 5, the user makes the following user utterance.

User utterance = "Play BGM."

The information processing apparatus 10 performs voice recognition and semantic analysis of the user utterance, and grasps that the user intent is "play".

On the basis of this user utterance analysis information, the display information generation unit 182 updates the display data on the display unit as illustrated in Fig. 5.

The display data of Fig. 5 is
display data showing process category display nodes 203 as child nodes of the video domain and the music domain and further showing the acceptable utterance display nodes 202 as child nodes of the process category display nodes 203.

The process category display node 203 is a node indicating a category of a process executable corresponding to each domain (video, music, game, and the like).

The acceptable utterance display node 202 is displayed as a child node of the process category display node 203.

A registered user utterance that causes the information processing apparatus 10 to execute a process related to a process displayed in the process category node, for example, a command is displayed in the acceptable utterance display node 202. Note that the command is a user utterance (= command) that causes the information processing apparatus 10 to execute some process among user utterances.

As illustrated in Fig. 5,
text data of the following user utterances (= commands) is displayed in the acceptable utterance display nodes 202:
"Fast forward ten minutes.";
"Return to the beginning."; and
"Play a moving image everyone watched yesterday.".

Those user utterances displayed in the acceptable utterance display nodes 202 are, for example, learning data (learning data in which a correspondence between a user utterance and the intent is recorded) utterance data recorded on the storage unit 170 in advance, or learning data learned and generated by the learning processing unit 165 on the basis of past user utterances, and are data recorded on the storage unit 170.

When the user makes an utterance that matches the acceptable utterance display node 202, the information processing apparatus 10 can accurately grasp the intent of the user utterance on the basis of the learning data and securely execute a process according to the user utterance.

From the user's point of view, when the user reads out the acceptable utterance display node 202 displayed on the display unit as it is, the user can be convinced that the information processing apparatus 10 executes a process intended by the user and can therefore make an utterance without anxiety.

Note that a character string displayed in the acceptable utterance display node 202 is a character string recorded as the learning data. However, even in a case where the user makes an utterance including a character string that does not match with this character string, the voice analysis unit 161 of the information processing apparatus 10 estimates the intent of the user utterance by referring to learning data including a close character string. Therefore, when the user makes an utterance close to the displayed data, the information processing apparatus 10 can execute an accurate process according to the user utterance.

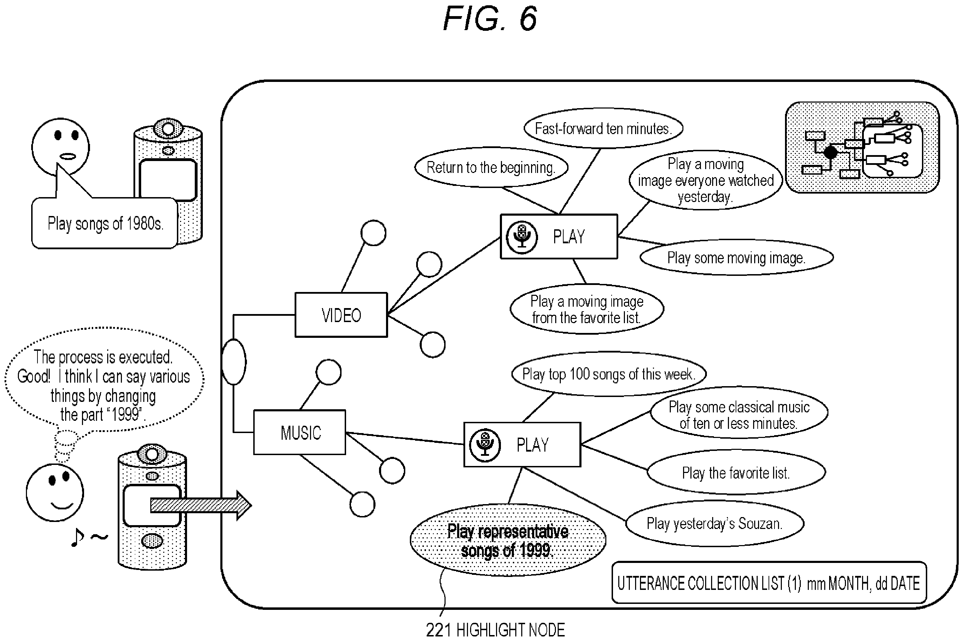

The display data of Fig. 5 is displayed on the display unit. Next, description will be made with reference to Fig. 6.

As illustrated in Fig. 6, the user makes the following user utterance.

User utterance = "Play songs of 1980s."

The information processing apparatus 10 performs voice recognition and semantic analysis of the user utterance, and grasps that the intent of the user is "to play songs of 1980s".

On the basis of this user utterance analysis information, the information processing apparatus 10 executes a process (of playing songs of 1980s).

Note that songs to be played are acquired from, for example, a server (a service providing server that provides music content) connected to a network.

Further, the display information generation unit 182 updates the display data on the display unit as illustrated in Fig. 6.

In the display data of Fig. 6,
the following node is highlighted as a highlight node 221:
"Play songs of 1999.", which is one of the acceptable utterance display nodes 202.

The user utterance = "Play songs of 1980s."
is similar to utterance data "Play songs of 1999." in the node, which is an utterance already recorded as learning data, and
the voice analysis unit 161 of the information processing apparatus 10 can perform accurate voice recognition and semantic analysis by referring to the learning data in which the utterance data "Play songs of 1999." is recorded, and can therefore securely grasp that the user intent is "to play songs of 1980s". That is, "1980s" can be acquired as an age entity, and, as a result, songs of 1980s are played.

When the intent of the user utterance is grasped, the display information generation unit 182 of the information processing apparatus 10 highlights the following node as the highlight node 221:
the node = "Play songs of 1999.", which is one of the acceptable utterance display nodes 202 having a similar intent.

By viewing this display, the user can be convinced that the user utterance has been correctly interpreted.

Further, as illustrated in Fig. 6,
it is possible to grasp a degree of understanding of the information processing apparatus 10 and determine other usable utterances, as can be seen from the following utterance:
{The process is executed. Good! I think I can say various things by changing the part "1999".}

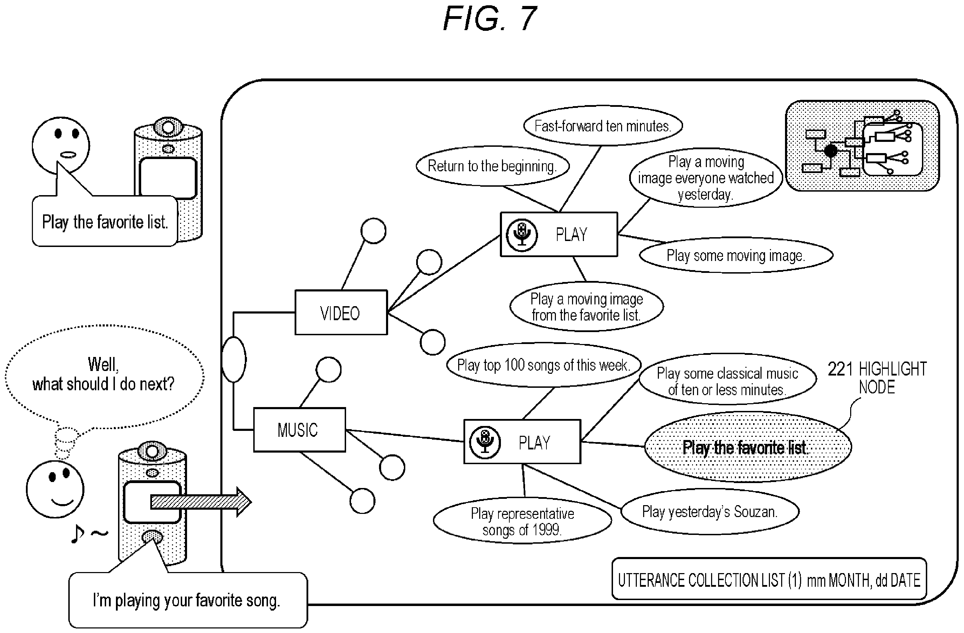

Next, description will be made with reference to Fig. 7.

As illustrated in Fig. 7, the user makes the following user utterance.

User utterance = "Play the favorite list."

The information processing apparatus 10 performs voice recognition and semantic analysis of the user utterance, and grasps that the user intent is "to play the favorite list".

On the basis of this user utterance analysis information, the information processing apparatus 10 executes a process (of playing the favorite list).

Note that the favorite list and songs to be played are acquired from, for example, a server (a service providing server that provides music content) connected to a network.

Further, the display information generation unit 182 updates the display data on the display unit as illustrated in Fig. 7.

In the display data of Fig. 7,
the following node is highlighted as the highlight node 221:
"Play the favorite list.", which is one of the acceptable utterance display nodes 202.

Further, the output voice generation unit 181 of the information processing apparatus 10 generates the following system response and outputs the system response via the voice output unit 121.

System response = "I'm playing your favorite song."

Note that, during execution of the process (during play of the song) in response to the user utterance, the voice analysis unit 161, the image analysis unit 162, the sensor information analysis unit 163, and the user state estimation unit 164 of the input data analysis unit 160 estimate a state of the user (whether or not the user is satisfied, or the like) on the basis of the user utterance, an image, sensor information, and the like, and outputs this estimation information to the learning processing unit 165. The learning processing unit 165 performs a process such as generation, updating, or discarding of learning data on the basis of the information.

For example, in a case where it is estimated that the user is satisfied, the learning processing unit 165 determines that the grasp of the intent and the execution of the process in response to the user utterance have been correctly performed, generates and updates learning data, and stores the learning data in the storage unit 170.

In a case where it is estimated that the user is not satisfied, the learning processing unit 165 determines that the grasp of the intent and the execution of the process in response to the user utterance have not been correctly performed, and does not generate or update learning data. Alternatively, for example, the learning processing unit 165 discards the generated learning data.

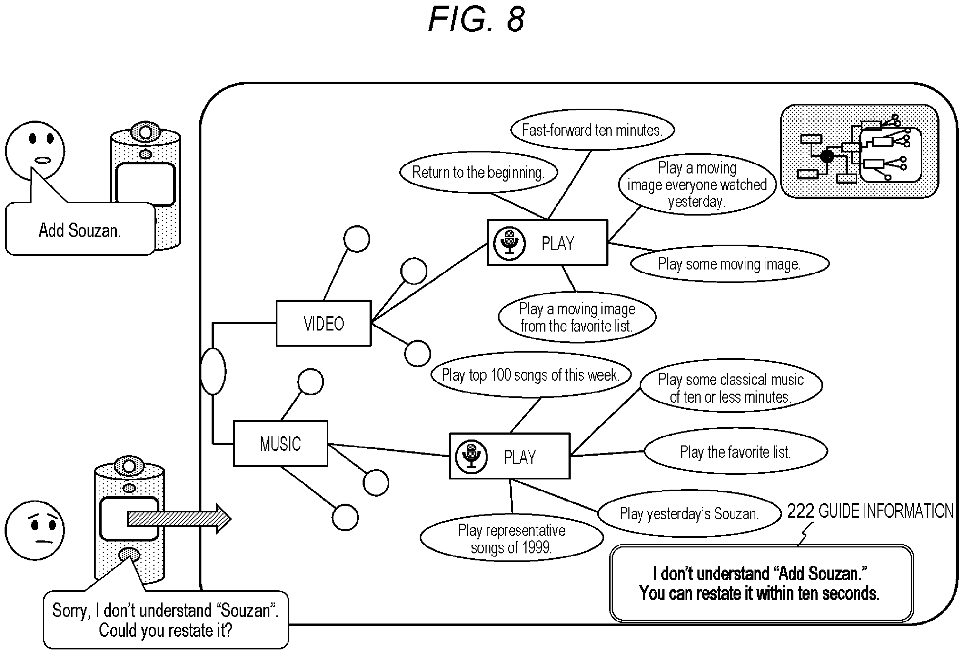

Next, description will be made with reference to Fig. 8.

As illustrated in Fig. 8, the user makes the following user utterance.

User utterance = "Add *Souzan."*

Note that *"Souzan"* is assumed to be a famous artist name.

It is assumed that the information processing apparatus 10 performs voice recognition and semantic analysis of the user utterance, but cannot interpret the user intent.

Such an utterance whose user intent cannot be interpreted is referred to as "out of domain utterance" (OOD utterance).

Note that a user utterance whose user intent can be interpreted and which is executable by the information processing apparatus 10 is referred to an "in domain (utterance)".

When the information processing apparatus 10 receives input of such an OOD utterance, the output voice generation unit 181 generates an inquiry response and outputs the inquiry response via the voice output unit 121. That is, as illustrated in Fig. 8, the output voice generation unit 181 generates and outputs the following system response.

System response = "Sorry, I don't understand "Souzan". Could you restate it?"

Further, as illustrated in Fig. 8, the display information generation unit 182 displays the following guide information 222 in a lower right part of the display unit.

Guide information = I don't understand "Add Souzan.". You can restate it within ten seconds.

After this display, the information processing apparatus 10 waits for ten seconds.

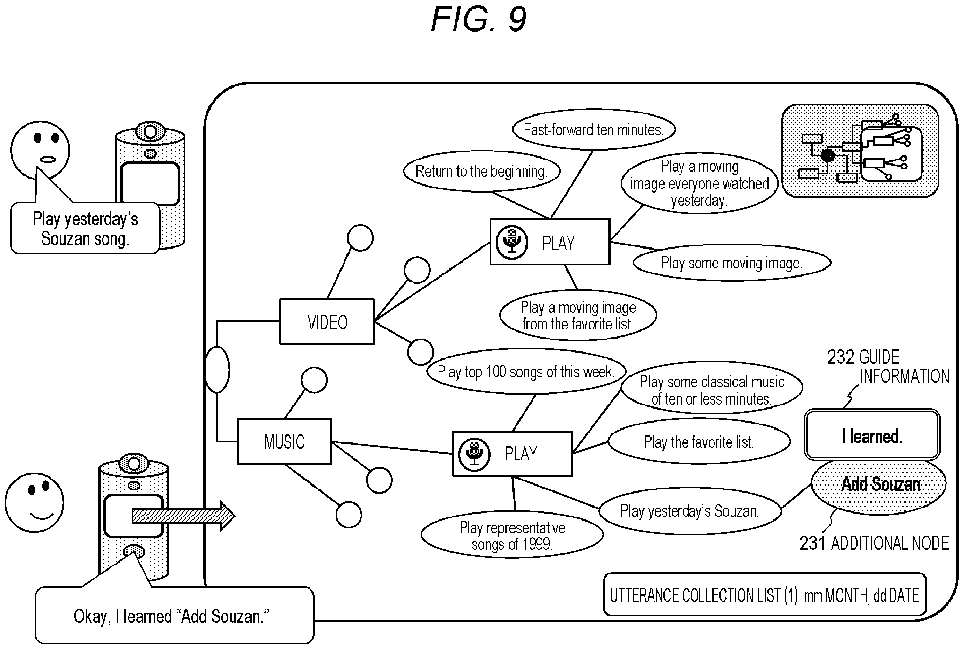

Next, description will be made with reference to Fig. 9.

As illustrated in Fig. 9, the user makes the following user utterance as a restatement utterance of "Add *Souzan."* regarded as an OOD utterance.

User utterance (restatement) = "Play yesterday's *Souzan* song."

The information processing apparatus 10 performs voice recognition and semantic analysis of the user utterance, and
grasps that the user intent of "Add *Souzan."* regarded as an OOD utterance is "to play a *Souzan* song", which is similar to the intent of "Play yesterday's *Souzan* song.".

The learning processing unit 165 stores a result of the grasp of the intent in the storage unit 170 as learning data.

Further, the output voice generation unit 181 of the information processing apparatus 10 generates and outputs the following system response.

System response = "Okay, I learned "Add *Souzan*."*.*"

Further, the display information generation unit 182 updates the display data on the display unit as illustrated in Fig. 9.

A node indicating the user utterance whose intent has been successfully grasped is added as an additional node 231, and guide information 232 indicating that learning has been performed is further displayed.

Note that, as described above, the learning processing unit 165 performs a process such as generation, updating, and discarding of learning data on the basis of a state of the user (whether or not the user is satisfied, or the like) estimated from information input from the voice analysis unit 161, the image analysis unit 162, the sensor information analysis unit 163, and the user state estimation unit 164 of the input data analysis unit 160.

That is, in a case where it is estimated that the user is satisfied, the learning processing unit 165 determines that the grasp of the intent and the execution of the process in response to the user utterance have been correctly performed, generates and updates learning data, and stores the learning data in the storage unit 170. In a case where it is estimated that the user is not satisfied, the learning processing unit 165 determines that the grasp of the intent and the execution of the process in response to the user utterance have not been correctly performed, and does not generate or update learning data. Alternatively, the learning processing unit 165 discards the generated learning data.

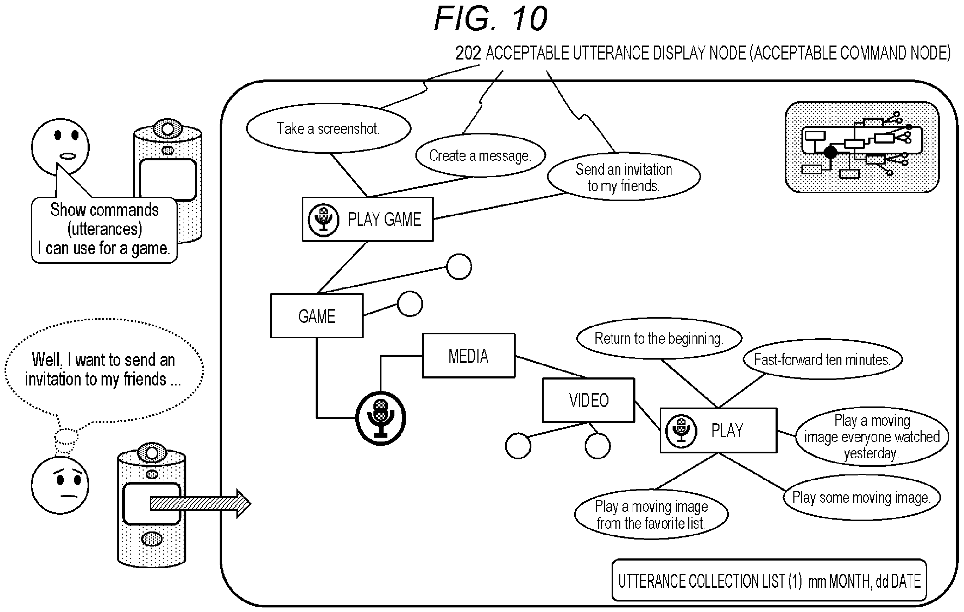

Next, description will be made with reference to Fig. 10.

The user wants to play a game next and makes the following user utterance.

User utterance = "Show commands (utterances) I can use for a game."

Note that a command is a user utterance (= command) that causes the information processing apparatus 10 to execute some process as described above.

The voice analysis unit 161 of the information processing apparatus 10 performs voice recognition and semantic analysis of the user utterance. On the basis of this analysis result, the display information generation unit 182 updates the display data on the display unit as illustrated in Fig. 10.

As illustrated in Fig. 10, a tree area showing the acceptable utterance display nodes 202 (= acceptable command nodes) set corresponding to the game domain is displayed.

The user thinks that he/she wants to play a game together with his/her friends, and searches for an optimum utterance (command) therefor from the acceptable utterance display nodes 202 (= acceptable command nodes).

The user finds the following node:
the node = "Send an invitation to my friends.", and
makes an utterance displayed in the node.

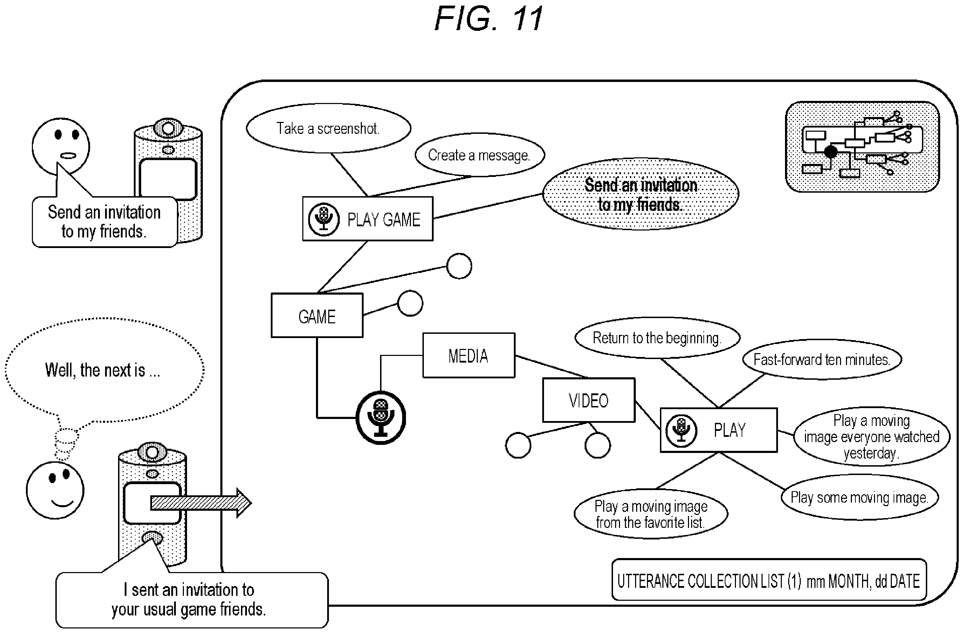

As illustrated in Fig. 11, the user makes the following user utterance.

User utterance = "Send an invitation to my friends."

The voice analysis unit 161 of the information processing apparatus 10 performs voice recognition and semantic analysis of the user utterance, and, on the basis of a result thereof, the information processing apparatus 10 executes a process (of transmitting an invitation email to the friends).

Note that the invitation email to the friends is, for example, directly transmitted from the information processing apparatus 10 or transmitted via a server (a service providing server that provides the game) connected to a network.

Further, the display information generation unit 182 updates the display data on the display unit as illustrated in Fig. 11.

When the intent of the user utterance is grasped, the display information generation unit 182 of the information processing apparatus 10 highlights the following node:
the node = "Send an invitation to my friends.", which is one of the acceptable utterance display nodes 202 having a similar intent.

By viewing this display, the user can be convinced that the user utterance has been correctly interpreted.

Further, the output voice generation unit 181 of the information processing apparatus 10 generates the following system response and outputs the system response via the voice output unit 121.

System response = "I sent an invitation to your usual game friends."

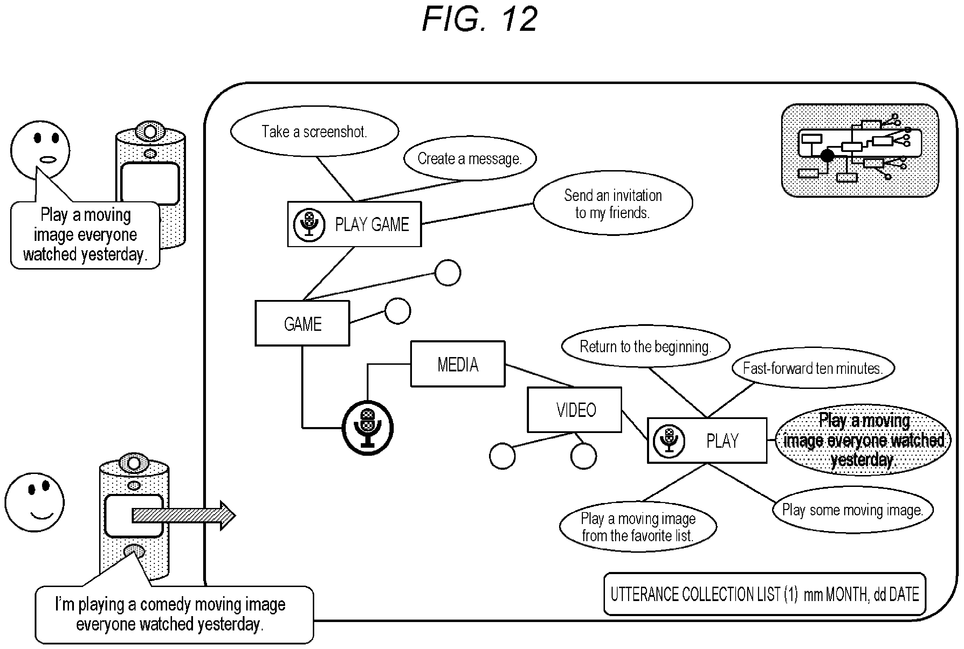

Next, description will be made with reference to Fig. 12.

The user wants to play a moving image while playing the game, and makes the following user utterance.

User utterance = "Play a moving image everyone watched yesterday."

The voice analysis unit 161 of the information processing apparatus 10 performs voice recognition and semantic analysis of the user utterance. On the basis of this analysis result, the information processing apparatus 10 executes a process (of playing a moving image).

Note that the moving image to be played is acquired from, for example, a server (a service providing server that provides moving image content) connected to a network.

Further, the display information generation unit 182 updates the display data on the display unit as illustrated in Fig. 12.

As illustrated in Fig. 12, the following node is highlighted:
the node = "Play a moving image everyone watched yesterday.", which is one of the acceptable utterance display nodes of the video domain, i.e., a node corresponding to the user utterance.

By viewing this display, the user can be convinced that the user utterance has been correctly interpreted.

Further, the output voice generation unit 181 of the information processing apparatus 10 generates the following system response and outputs the system response via the voice output unit 121.

System response = "I'm playing a comedy moving image everyone watched yesterday."

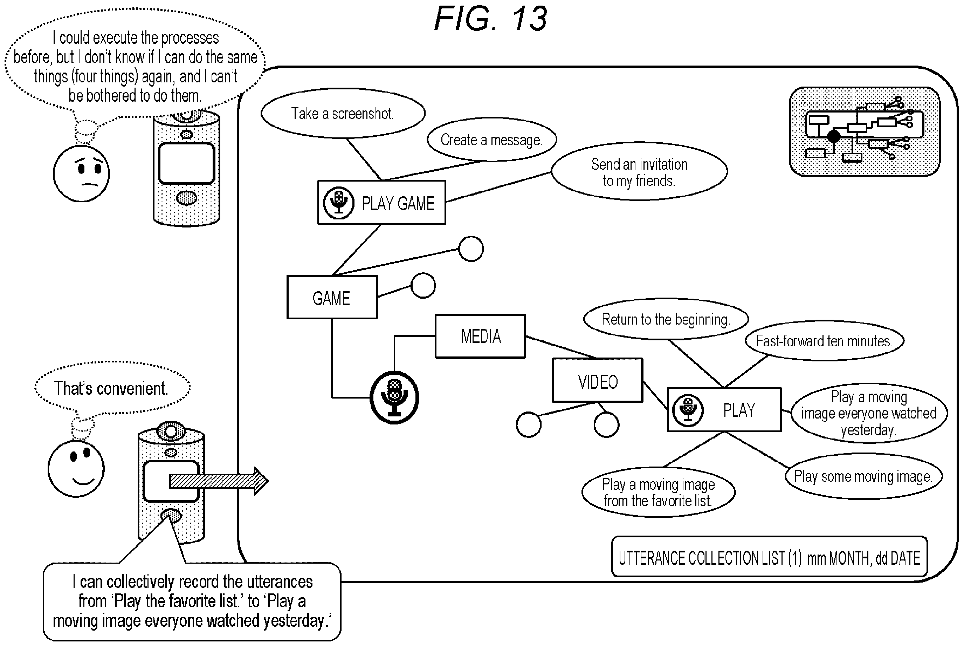

Next, description will be made with reference to Fig. 13.

In Fig. 13, the user thinks as follows. That is, the user thinks that
{I could execute the processes before, but I don't know if I can do the same things (four things) again, and I can't be bothered to do them.}.

The four things are processes corresponding to the following four user utterances:
(1) "Play the favorite list." (Fig. 7);
(2) "Add *Souzan."* (Fig. 8);
(3) "Send an invitation to my friends." (Fig. 11); and
(4) "Play a moving image everyone watched yesterday." (Fig. 12).

At this time, the input data analysis unit 160 of the information processing apparatus 10 analyzes that the user is worried about something and seems to be dissatisfied. That is, on the basis of information input from the voice analysis unit 161, the image analysis unit 162, and the sensor information analysis unit 163, the user state estimation unit 164 generates the user state estimation information 192 indicating that the user is worried about something and seems to be dissatisfied and outputs the user state estimation information to the output information generation unit 180.

The output voice generation unit 181 of the output information generation unit 180 generates and outputs the following system utterance in response to input of the user state estimation information 192.

System utterance = "I can collectively record the utterances from 'Play the favorite list.' to 'Play a moving image everyone watched yesterday.'"

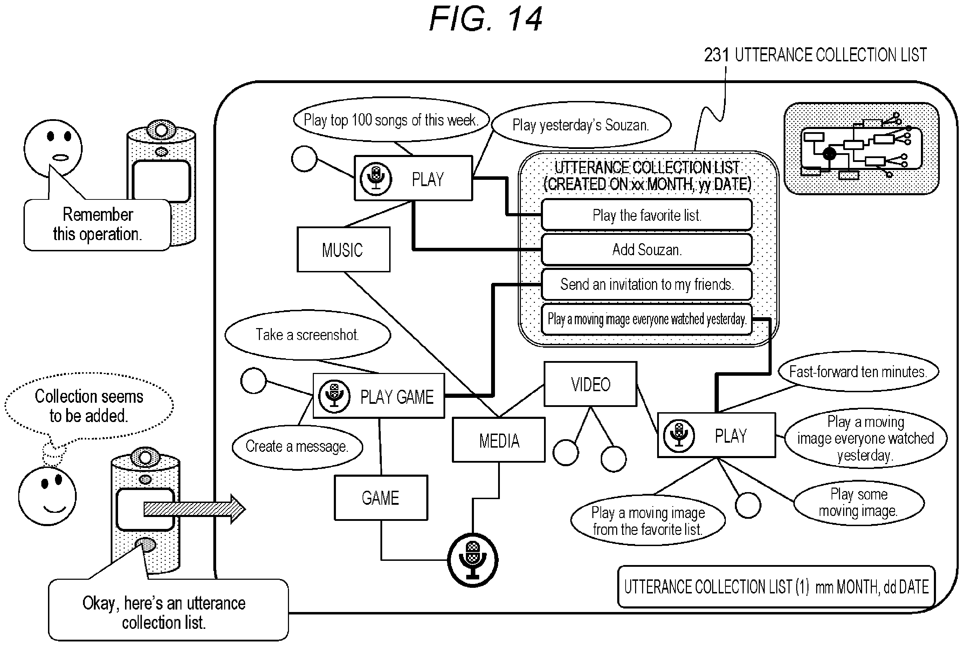

Next, description will be made with reference to Fig. 14.

As illustrated in Fig. 14, the user makes the following user utterance in response to the system utterance.

User utterance = "Remember this operation."

The voice analysis unit 161 of the information processing apparatus 10 performs voice recognition and semantic analysis of the user utterance. On the basis of the analysis result, the information processing apparatus 10 executes a process (a process of generating an "utterance collection list"). Further, the display information generation unit 182 updates the display data on the display unit as illustrated in Fig. 14.

As illustrated in Fig. 14, the display unit displays an utterance collection list 231 in which a plurality of utterances is collected and listed.

The "utterance collection list" is data in which a plurality of user utterances (commands) is listed.

That is, the user utterances recorded in the "utterance collection list" are user utterances corresponding to commands that are processing requests made by the user to the information processing apparatus 10.

The "utterance collection list" is generated in the learning processing unit 165.

In response to the user utterance = "Remember this operation.",
the learning processing unit 165 generates an utterance collection list in which the following four user utterances are collected as a list, and stores the list in the storage unit 170 as a piece of learning data:
The four things are processes corresponding to the following four user utterances:
(1) "Play the favorite list." (Fig. 7);
(2) "Add *Souzan."* (Fig. 8);
(3) "Send an invitation to my friends." (Fig. 11); and
(4) "Play a moving image everyone watched yesterday." (Fig. 12).

For example, in a case where the user makes a user utterance included in the "utterance collection list" stored in the storage unit 170, or in a case where the user specifies the "utterance collection list" stored in the storage unit 170 and makes an utterance to request the processes, the information processing apparatus 10 sequentially executes the processes according to the user utterances recorded in the "utterance collection list".

When the "utterance collection list" is generated in the learning processing unit 165, as illustrated in Fig. 14, the display information generation unit 182 displays the generated "utterance collection list" 231 on the display unit.

When the user makes an utterance to specify the "utterance collection list" 231 from next time, the user can cause the information processing apparatus to collectively execute a plurality of processes recorded in the specified list.

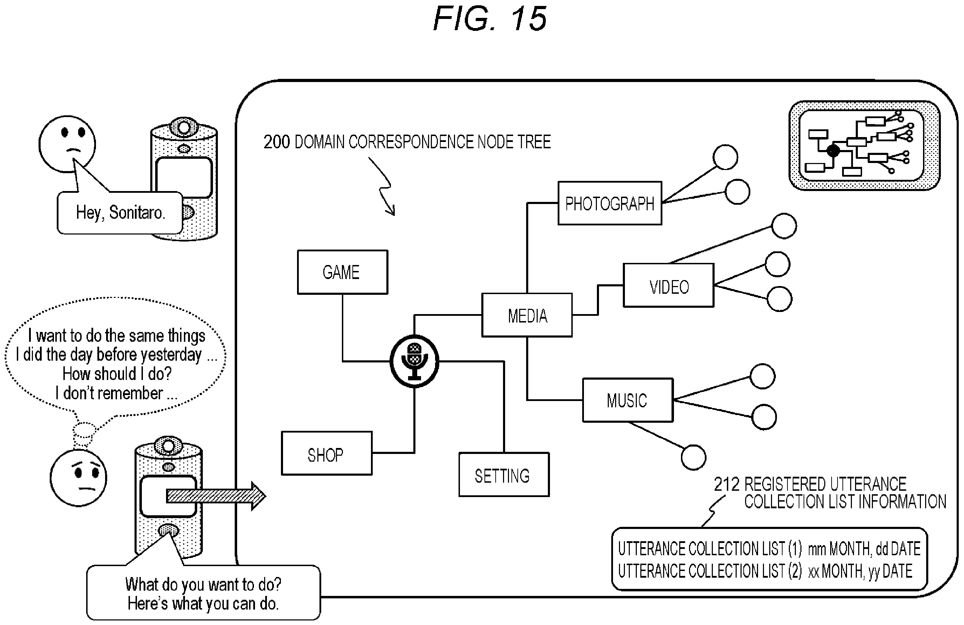

A processing example using a generated utterance collection list will be described with reference to Fig. 15.

### [3. Processing example using utterance collection list]

Next, a processing example using an utterance collection list will be described.

A processing example using the "utterance collection list" 231 generated by the process described above with reference to Fig. 14 will be described.

First, when the information processing apparatus 10 is started, the display unit of the information processing apparatus 10 displays an initial screen illustrated in Fig. 15.

This is the same as the display data described above with reference to Fig. 4.

As illustrated in Fig. 15, first, the user makes the following user utterance as a call to the information processing apparatus 10:
User utterance = "Hey, *Sonitaro*."

In response to the call, the information processing apparatus 10 makes the following system response.

System response = "What do you want to do? Here's what you can do."

In addition to the output of the above system response, the information processing apparatus 10 further displays the display data of Fig. 15 generated by the display information generation unit 182 on the image output unit (display unit) 122.

The display data of Fig. 15 is data showing the domain correspondence node tree 200 described above with reference to Fig. 4.

The user thinks as follows while viewing the display data.

{I want to do the same things I did the day before yesterday... How should I do? I don't remember...}

Note that the "utterance collection list" 231 described with reference to Fig. 14 is assumed to be generated the day before yesterday.

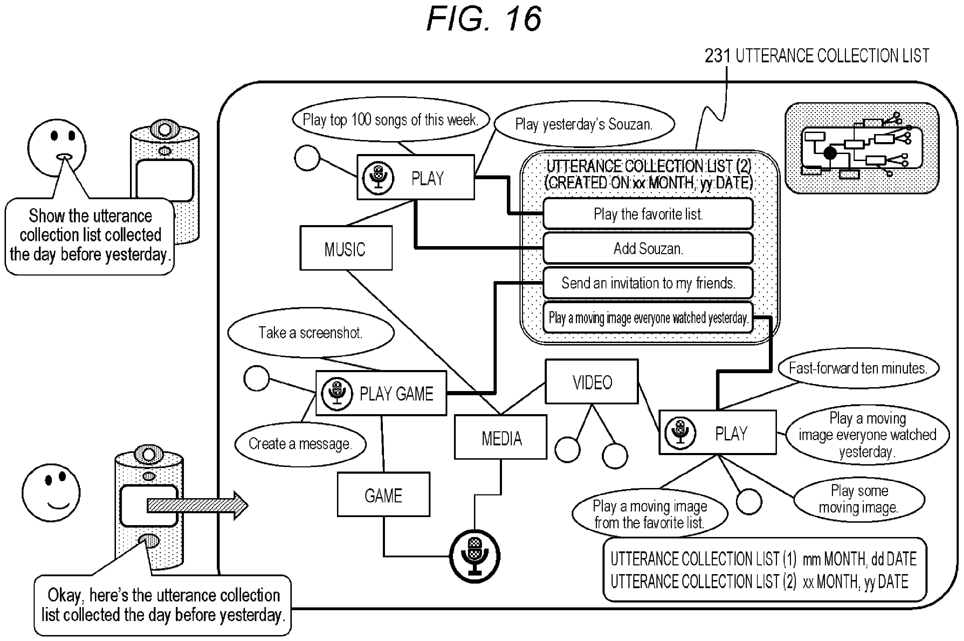

Next, description will be made with reference to Fig. 16.

As illustrated in Fig. 16, the user makes the following user utterance.

User utterance = "Show the utterance collection list collected the day before yesterday."

The information processing apparatus 10 performs voice recognition and semantic analysis of the user utterance, and grasps that the user intent is "a request to display the utterance collection list generated the day before yesterday".

On the basis of this user utterance analysis information, the display information generation unit 182 of the information processing apparatus 10 displays the "utterance collection list" 231 on the display unit.

Further, the output voice generation unit 181 of the information processing apparatus 10 generates the following system response and outputs the system response via the voice output unit 121.

System response = "Okay, here's the utterance collection list collected the day before yesterday."

By viewing the utterance collection list 231 displayed on the display unit, the user can reconfirm a series of four utterances and processes executed the day before yesterday.

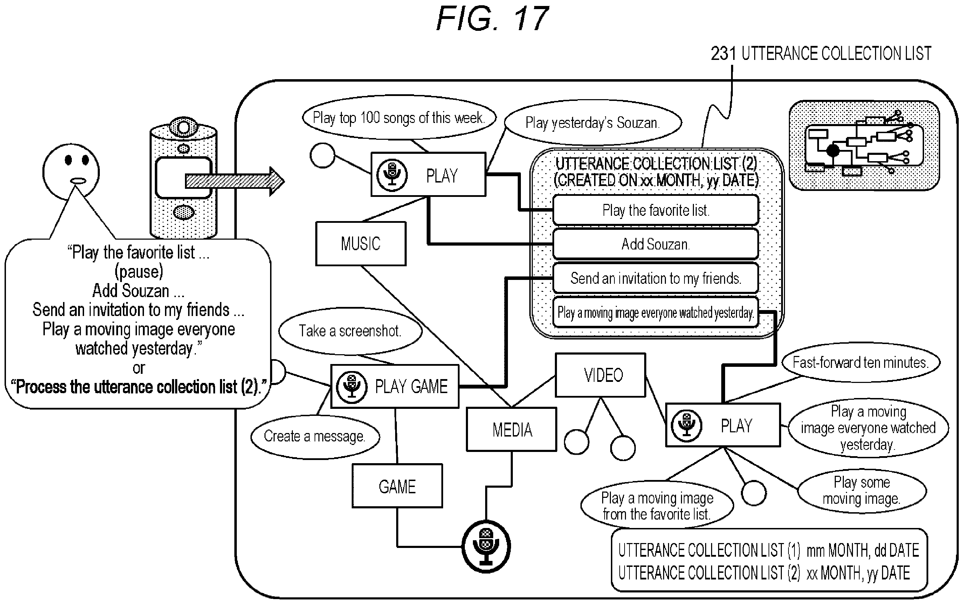

Next, description will be made with reference to Fig. 17.

In Fig. 17, the user sequentially makes utterances similar to the utterances recorded in the utterance collection list 231 displayed on the display unit. That is, the user sequentially makes the following utterances:
(1) "Play the favorite list.";
(2) "Add *Souzan.*";
(3) "Send an invitation to my friends."; and
(4) "Play a moving image everyone watched yesterday.",
and can therefore cause the information processing apparatus 10 to securely execute exactly the same processes as those executed the day before yesterday.

Alternatively, instead of sequentially making those utterances, the user may make one of the following utterances:
a user utterance = "Process the utterance collection list (2)."; and
a user utterance = "Process the displayed utterance collection list."

The voice analysis unit 161 of the information processing apparatus 10 performs voice recognition and semantic analysis of the user utterance. On the basis of the analysis result, the information processing apparatus 10 executes a process (a process of the "utterance collection list (2)"). That is, the information processing apparatus 10 sequentially executes processes corresponding to the plurality of user utterances recorded in the utterance collection list.

Note that the display information generation unit 182 of the information processing apparatus 10 changes a display mode of the utterance collection list 231 displayed on the display unit in accordance with a state of execution of the processes in the information processing apparatus 10.

Specifically, the display information generation unit 182 performs a process of highlighting a node (acceptable utterance display node) in the list corresponding to the process that is currently executed by the information processing apparatus 10.

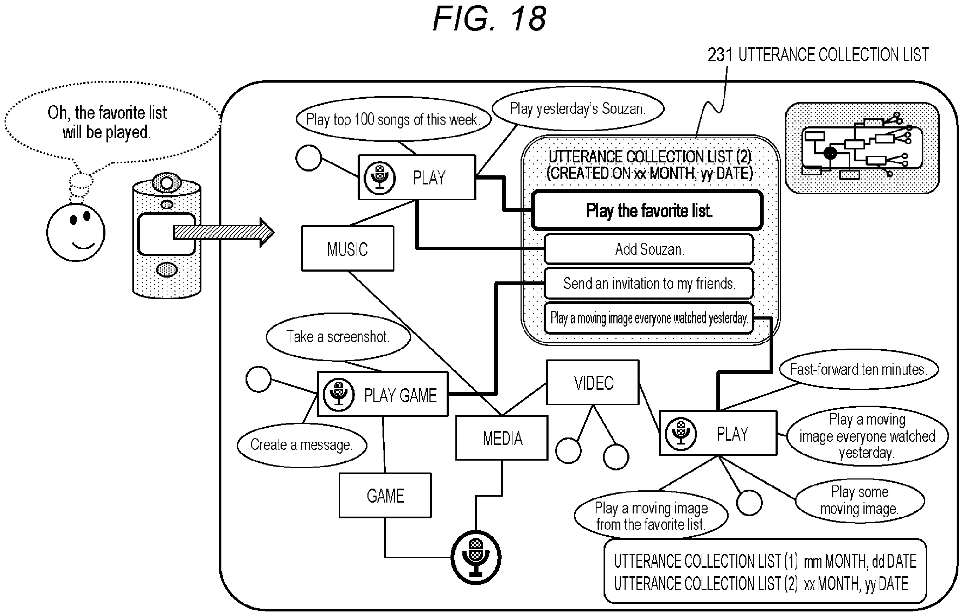

This highlighting process will be described with reference to Fig. 18 and subsequent drawings.

First, the information processing apparatus 10 first starts a process (a process of playing the favorite list) based on a user utterance corresponding to the following node:
the node = "Play the favorite list.", which is the first node recorded in the utterance collection list 231.

As illustrated in Fig. 18, the display information generation unit 182 highlights the node that is recorded in the utterance collection list 231 and is currently executed by the information processing apparatus 10, i.e., the following node:
the node = "Play the favorite list.".

By viewing the highlighted display, the user can confirm that the information processing apparatus 10 is correctly executing the process of playing the favorite list.

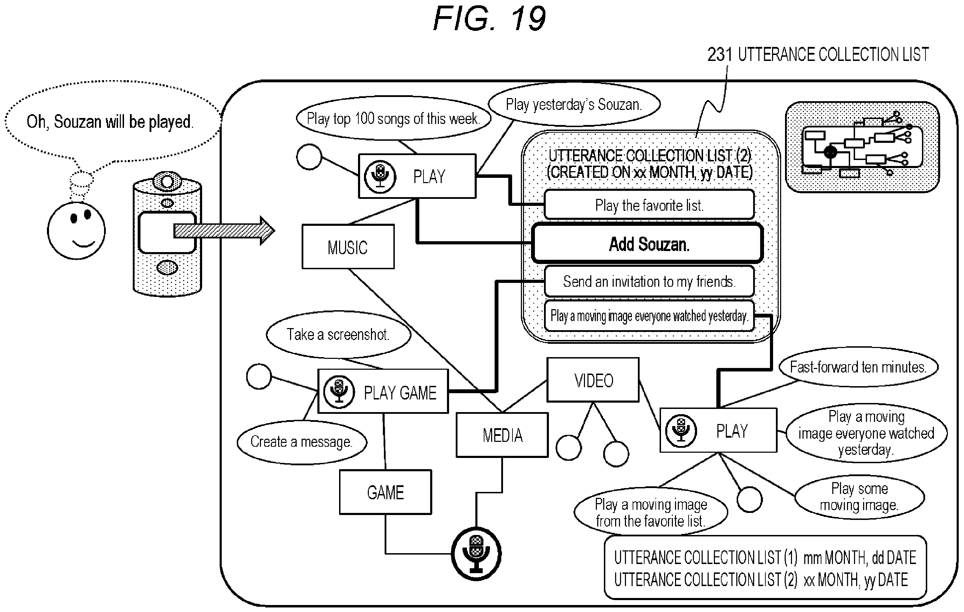

Next, description will be made with reference to Fig. 19.

As illustrated in Fig. 19, the information processing apparatus 10 starts a process (of playing *Souzan*) based on a user utterance corresponding to the following node:
the node = "Add *Souzan.",* which is the second node recorded in the utterance collection list 231.

Then, as illustrated in Fig. 19, the display information generation unit 182 highlights the node that is recorded in the utterance collection list 231 and is currently executed by the information processing apparatus 10, i.e., the following node:
the node = "Add *Souzan.".*

By viewing the highlighted display, the user can confirm that the information processing apparatus 10 is correctly executing the process of playing *Souzan.*

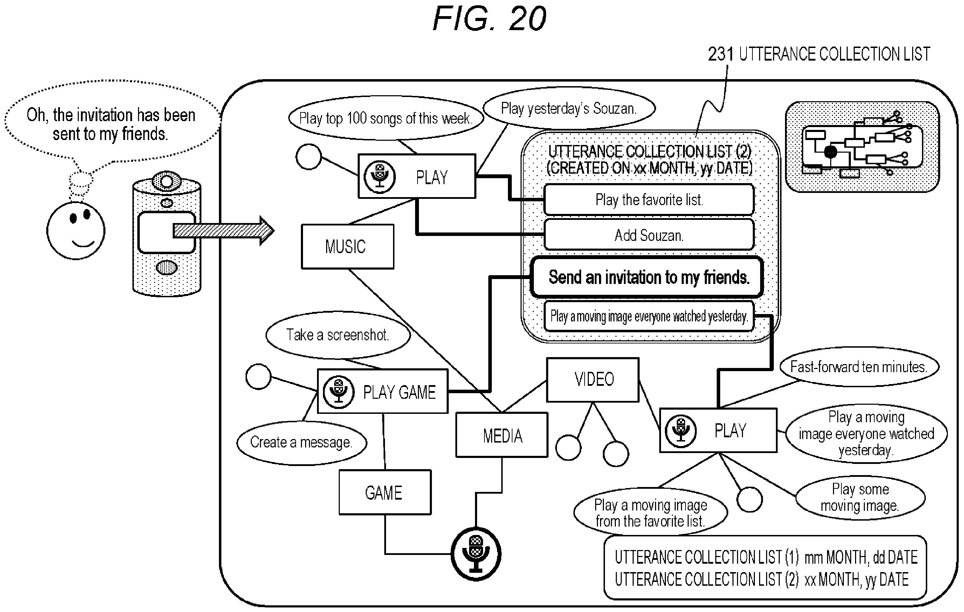

Next, description will be made with reference to Fig. 20.

As illustrated in Fig. 20, the information processing apparatus 10 starts a process (of transmitting an invitation email to the friends) based on a user utterance corresponding to the following node:
the node = "Send an invitation to my friends.", which is the third node recorded in the utterance collection list 231.

Then, as illustrated in Fig. 20, the display information generation unit 182 highlights the node that is recorded in the utterance collection list 231 and is currently executed by the information processing apparatus 10, i.e., the following node:
the node = "Send an invitation to my friends.".

By viewing the highlighted display, the user can confirm that the information processing apparatus 10 is correctly executing the process of transmitting an invitation email to the friends.

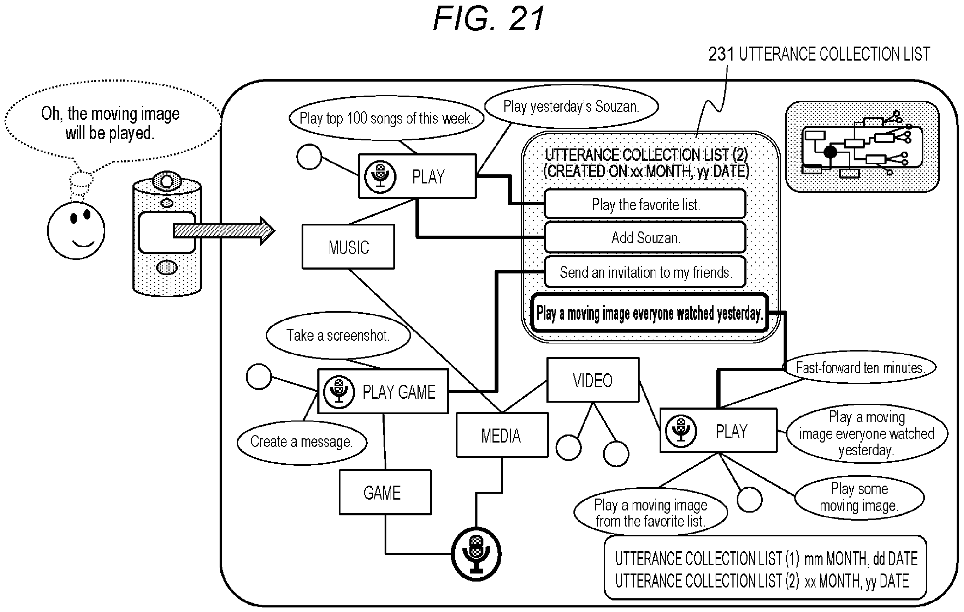

Next, description will be made with reference to Fig. 21.

As illustrated in Fig. 20, the information processing apparatus 10 starts a process (of playing the moving image everyone watched yesterday) based on a user utterance corresponding to the following node:
the node = "Play a moving image everyone watched yesterday.", which is the fourth node recorded in the utterance collection list 231.

Then, as illustrated in Fig. 20, the display information generation unit 182 highlights the node that is recorded in the utterance collection list 231 and is currently executed by the information processing apparatus 10, i.e., the following node:
the node = "Play a moving image everyone watched yesterday.".

By viewing the highlighted display, the user can confirm that the information processing apparatus 10 is correctly executing the process of playing the moving image everyone watched yesterday.

The "utterance collection list" can be freely created by the user, and it is possible to cause the information processing apparatus 10 to securely execute a plurality of processes at once or sequentially by performing processes by using the created list.

Further, an "utterance collection list" created by another user can also be used.

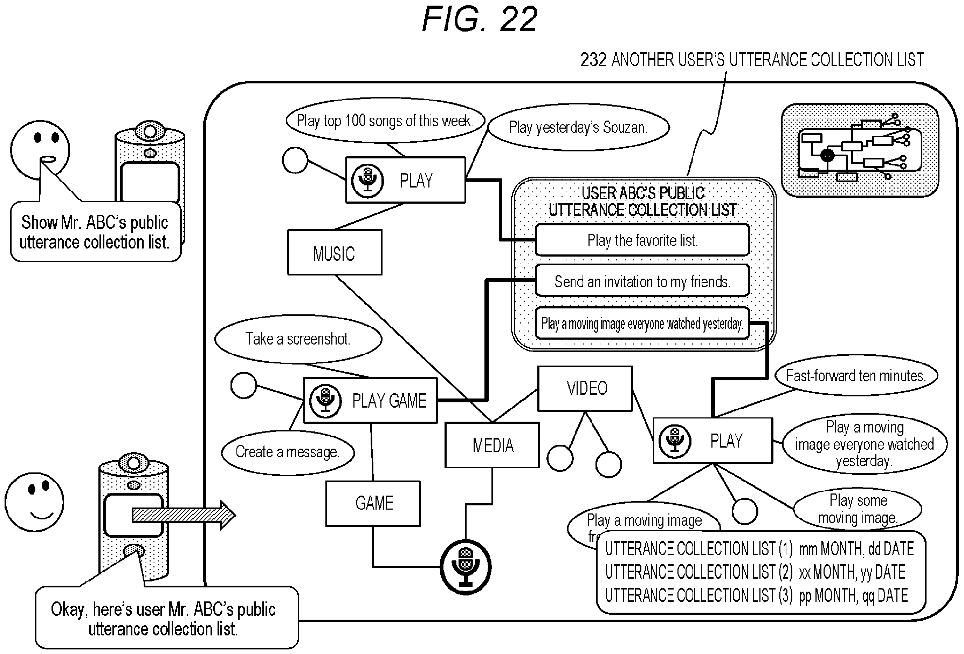

Fig. 22 illustrates an example in which an utterance collection list 232 generated by a user ABC who is another user is displayed.

The user makes the following user utterance.

User utterance = "Show Mr. ABC's public utterance collection list."

The voice analysis unit 161 of the information processing apparatus 10 performs voice recognition and semantic analysis of the user utterance, and, on the basis of a result thereof, the information processing apparatus 10 executes a process (of acquiring and displaying Mr. ABC's public utterance collection list).

The display information generation unit 182 updates the display data on the display unit as illustrated in Fig. 22.

That is, Mr. ABC's public utterance collection list 232 is displayed.

For example, a large number of user's utterance collection lists are stored in a storage unit of a server accessible by the information processing apparatus 10.

For each utterance collection list, it is possible to set whether or not the utterance collection list is made public, and only a list set to "public" can be acquired and displayed in response to a request from another user.

Another user's public utterance collection list displayed on the display unit as illustrated in Fig. 22 is thereafter stored in the storage unit 170 as a list that can be used anytime by a user who calls the list.

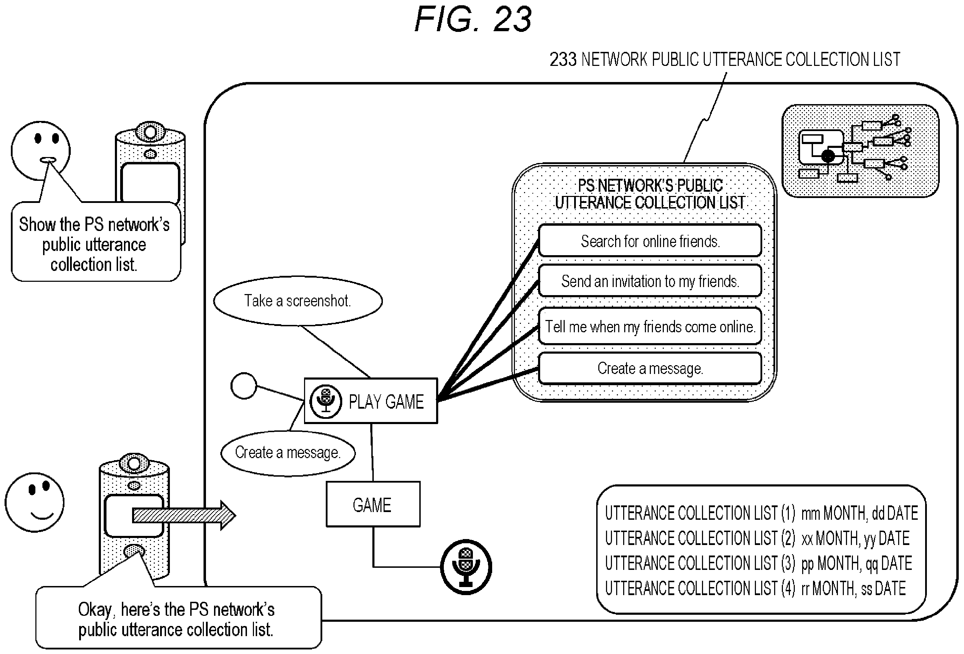

Further, as illustrated in Fig. 23, it is also possible to, for example, acquire, display, and use a network public utterance collection list 233 that is a public utterance collection list generated by a game-only network managed by a game-only server.

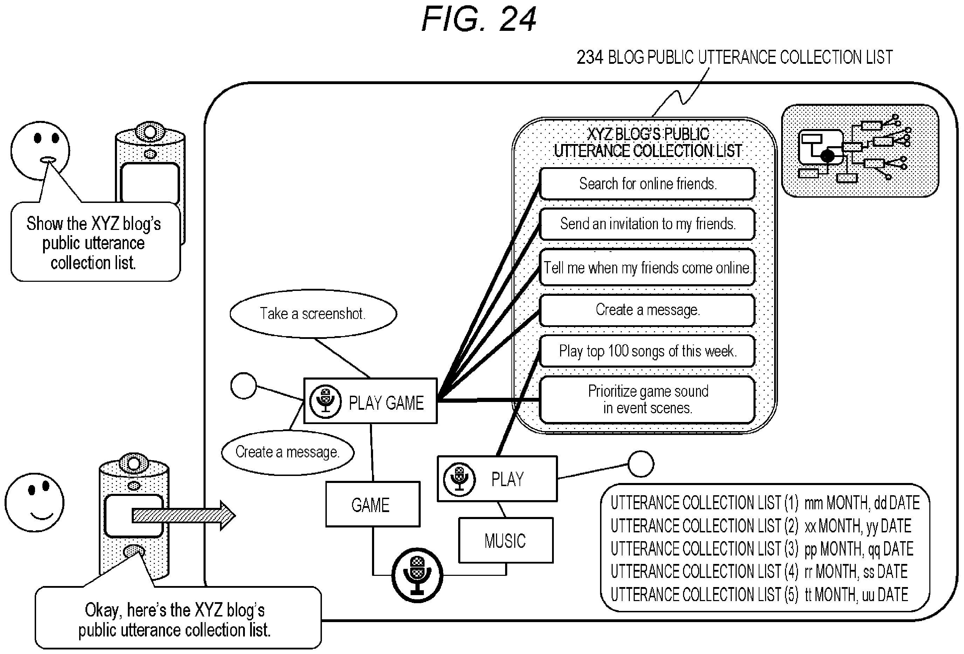

Further, as illustrated in Fig. 24, it is also possible to, for example, acquire, display, and use a blog public utterance collection list 234 that is a public utterance collection list that is made public in a blog.

### [4. Other examples of displaying and generating utterance collection list]

Next, other processing examples of displaying and generating an utterance collection list, which are different from the above embodiment, will be described.

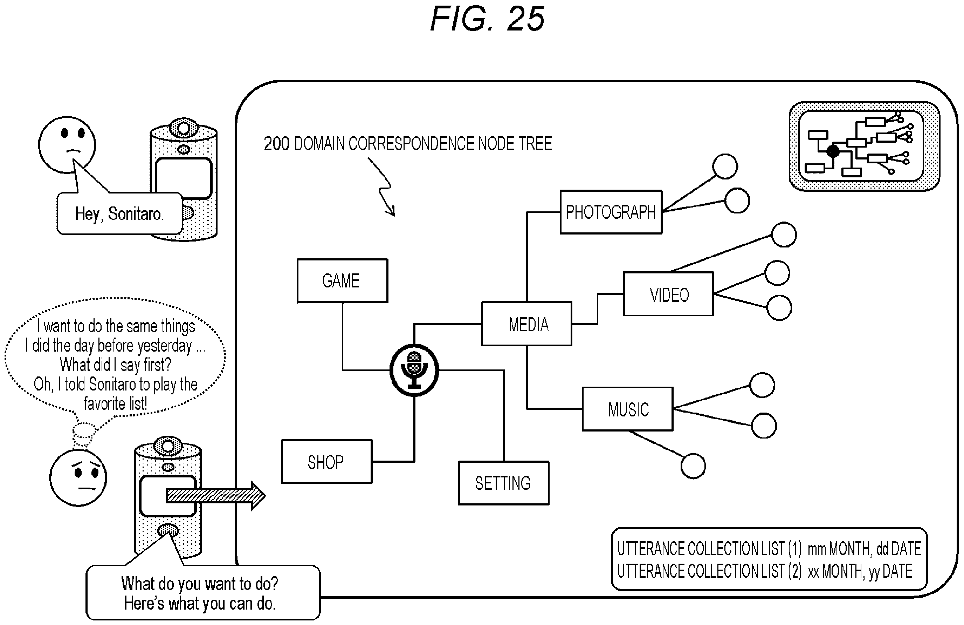

Those processing examples will be described with reference to Fig. 25 and subsequent drawings.

Fig. 25 illustrates an initial screen displayed on the display unit of the information processing apparatus 10 when the information processing apparatus 10 is started.

This is the same as the display data described above with reference to Fig. 4.

As illustrated in Fig. 25, first, the user makes the following user utterance as a call to the information processing apparatus 10.

User utterance = "Hey, *Sonitaro."*

In response to the call, the information processing apparatus 10 makes the following system response.

System response = "What do you want to do? Here's what you can do."

In addition to the output of the above system response, the information processing apparatus 10 further displays the display data of Fig. 15 generated by the display information generation unit 182 on the image output unit (display unit) 122.

The display data of Fig. 15 is data showing the domain correspondence node tree 200 described above with reference to Fig. 4.

The user thinks as follows while viewing the display data.

{I want to do the same things I did the day before yesterday... What did I say first? Oh, I told *Sonitaro* to play the favorite list!}

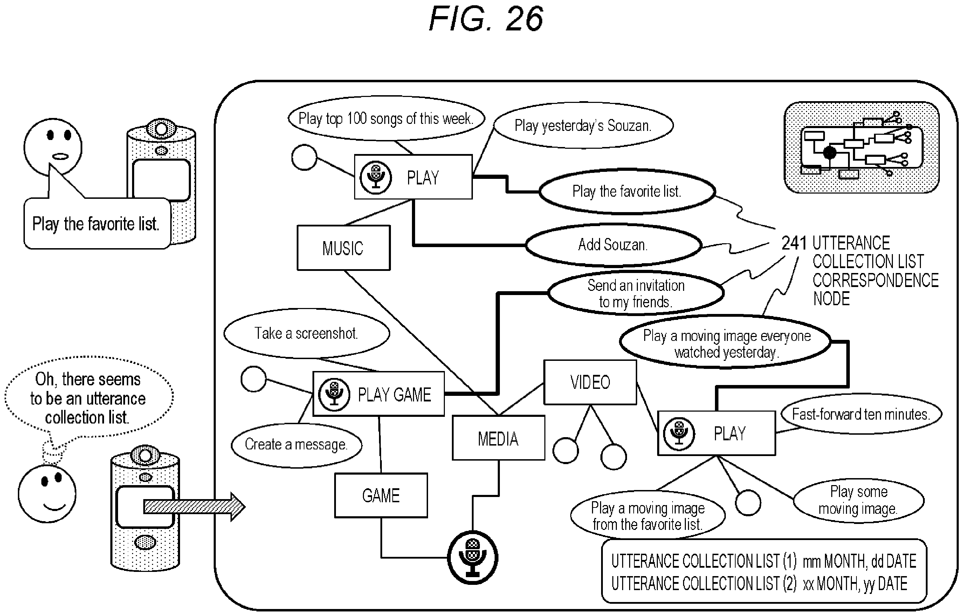

Next, description will be made with reference to Fig. 26.

As illustrated in Fig. 26, the user makes the following user utterance.

User utterance = "Play the favorite list."

The information processing apparatus 10 performs voice recognition and semantic analysis of the user utterance, and grasps that the user intent is a "request to play the favorite list".

Further, the learning processing unit 165 of the information processing apparatus 10 inputs this voice analysis result, and
makes a search to determine whether or not an "utterance collection list" in which the following user utterance is registered is stored in storage unit 170:
the user utterance = "Play the favorite list.".

As a result, it is detected that the "utterance collection list" described above with reference to Fig. 14 is stored in the storage unit 170. That is, it is detected that the "utterance collection list" in which the following user utterances are recorded is stored in the storage unit 170:
(1) "Play the favorite list.";
(2) "Add *Souzan.*";
(3) "Send an invitation to my friends."; and
(4) "Play a moving image everyone watched yesterday.".

On the basis of the detection result, the display information generation unit 182 of the information processing apparatus 10 executes a process of displaying the "utterance collection list" stored in the storage unit 170 on the display unit.

First, as illustrated in Fig. 26, the display information generation unit 182 starts moving nodes corresponding to the user utterances recorded in the "utterance collection list", i.e., utterance collection list correspondence nodes 241 in Fig. 26.

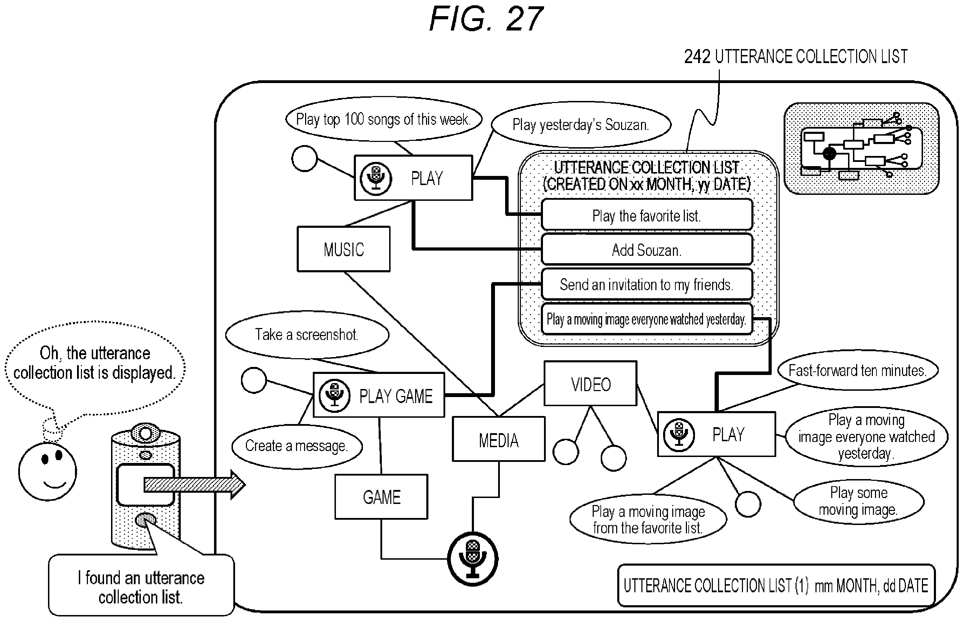

Then, as illustrated in Fig. 27, an utterance collection list 242 including those nodes is displayed.

By viewing this display, the user can confirm that there exists the "utterance collection list" 242 including the user utterance made earlier, i.e., the following user utterance:
the user utterance = "Play the favorite list."

Further, by referring to the displayed "utterance collection list" 242, the user can cause the information processing apparatus 10 to securely execute exactly the same processes as a series of the plurality of processes that has been previously executed.

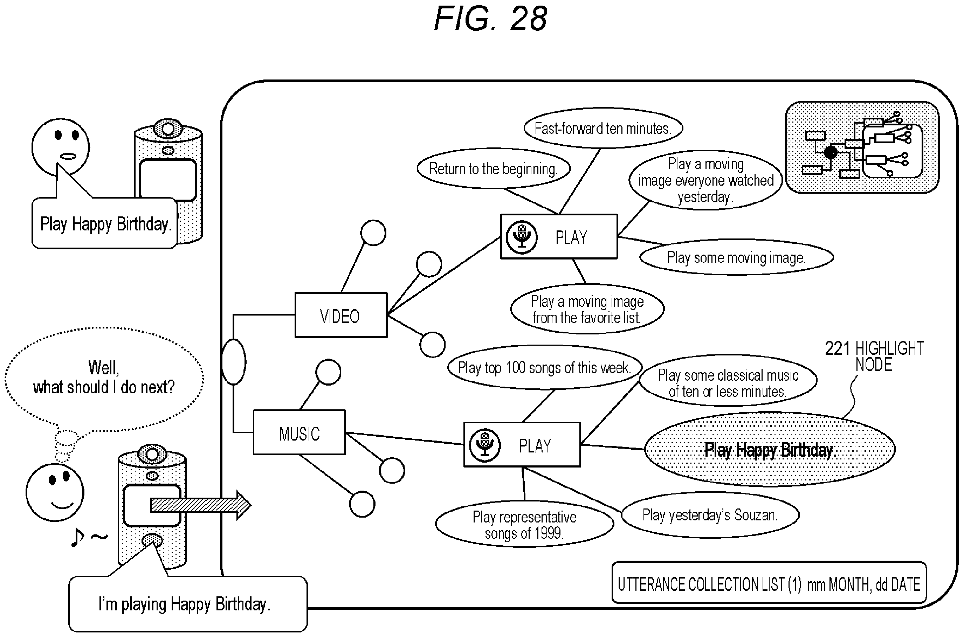

Furthermore, an example in which the learning processing unit 165 of the information processing apparatus 10 spontaneously determines whether or not to perform a process of generating an utterance collection list, and performs the process of generating an utterance collection list will be described with reference to Fig. 28 and subsequent drawings.

First, as illustrated in Fig. 28, the user makes the following user utterance.

User utterance = "Play Happy Birthday."

The voice analysis unit 161 of the information processing apparatus 10 performs voice recognition and semantic analysis of the user utterance, and grasps that the user intent is a "request to play Happy Birthday".

On the basis of this user utterance analysis information, the information processing apparatus 10 executes a process (of playing Happy Birthday). Further, the display information generation unit 182 updates the display data on the display unit as illustrated in Fig. 28.

In the display data of Fig. 28,
the following node is highlighted as the highlight node 221:
"Play Happy Birthday.", which is one of the acceptable utterance display nodes 202.

Further, the output voice generation unit 181 of the information processing apparatus 10 generates the following system response and outputs the system response via the voice output unit 121.

System response = "I'm playing Happy Birthday."

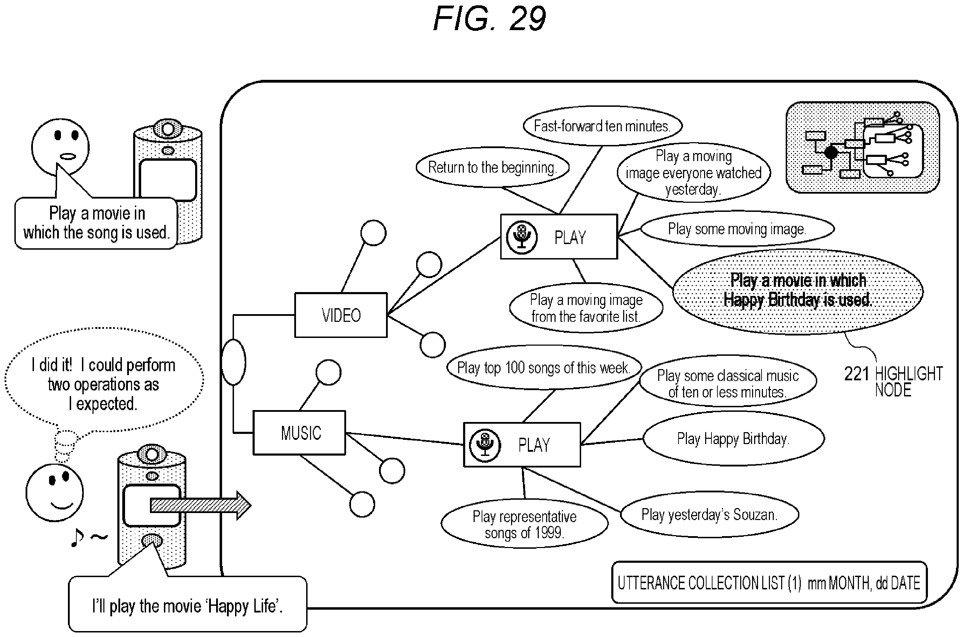

Then, as illustrated in Fig. 29, the user makes the following user utterance.

User utterance = "Play a movie in which the song is used."

The voice analysis unit 161 of the information processing apparatus 10 performs voice recognition and semantic analysis of the user utterance, and grasps that the user intent is a "request to play a movie in which Happy Birthday is used".

On the basis of this user utterance analysis information, the information processing apparatus 10 executes a process (of playing a movie in which Happy Birthday is used). Further, the display information generation unit 182 updates the display data on the display unit as illustrated in Fig. 29.

In the display data of Fig. 29,
the following node is highlighted as the highlight node 221:
"Play a movie in which Happy Birthday is used.", which is one of the acceptable utterance display nodes 202.

Further, the output voice generation unit 181 of the information processing apparatus 10 generates the following system response and outputs the system response via the voice output unit 121.

System response = "I'll play the movie Happy Life."

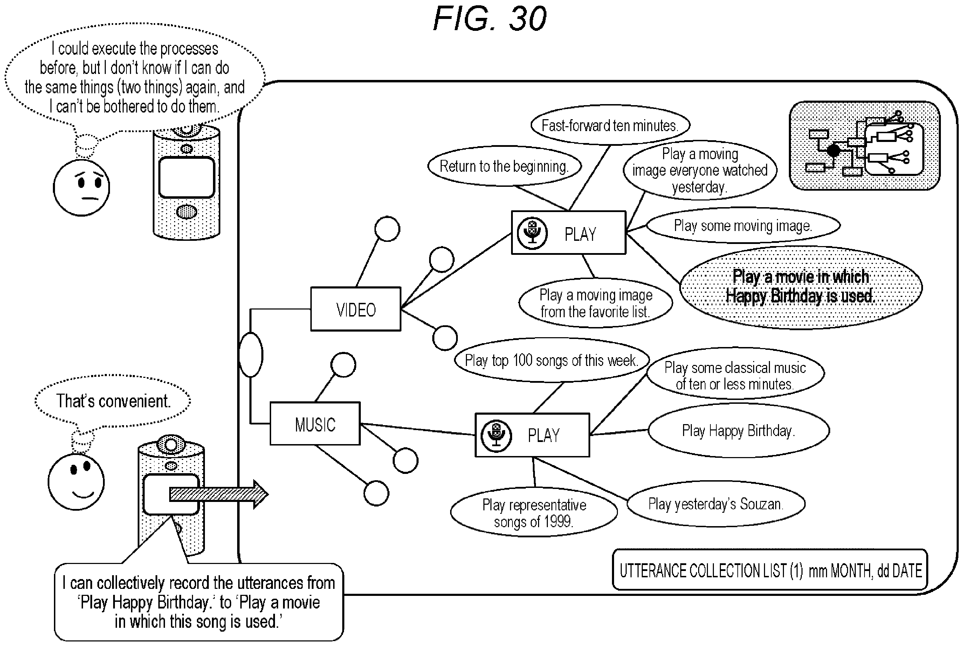

Further, in Fig. 30, the learning processing unit 165 of the information processing apparatus 10 verifies a history of the user utterances.

User utterance = "Play Happy Birthday."

User utterance = "Play a movie in which the song is used."

The learning processing unit 165 confirms that, between those two user utterances, the second user utterance includes a demonstrative "the" for the first user utterance, and determines that the two user utterances have a strong relationship.

On the basis of the determination of the relationship, the learning processing unit 165 determines that an utterance collection list including the two user utterances should be generated.

As illustrated in Fig. 30, the information processing apparatus 10 outputs the following system utterance even if there is no explicit request from the user.

System utterance = "I can collectively record the utterances from 'Play Happy Birthday.' to 'Play a movie in which the song is used.'"

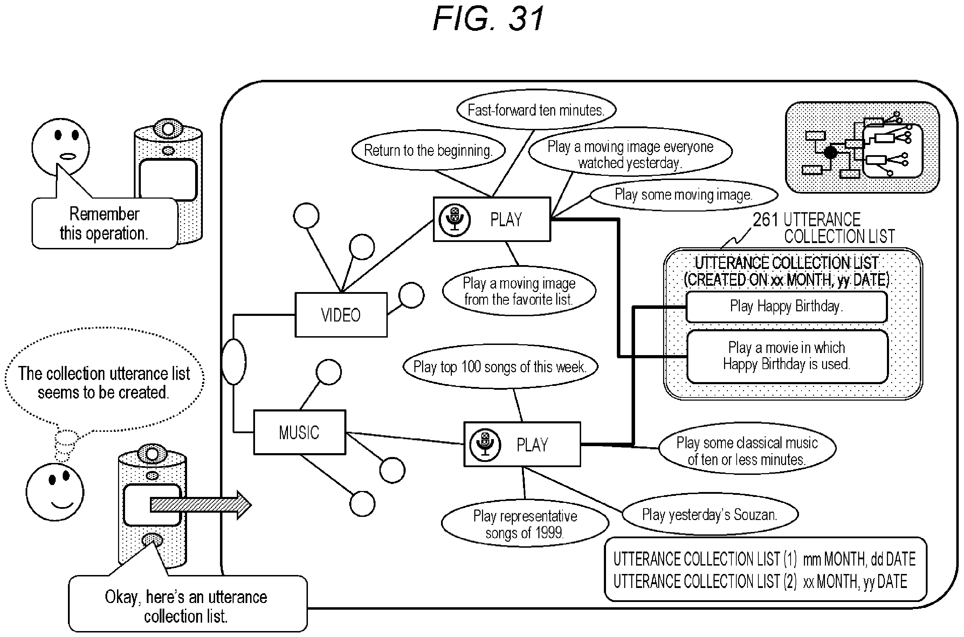

Next, description will be made with reference to Fig. 31.

As illustrated in Fig. 31, the user makes the following user utterance in response to the system utterance.

User utterance = "Remember this operation."

The voice analysis unit 161 of the information processing apparatus 10 performs voice recognition and semantic analysis of the user utterance. On the basis of the analysis result, the information processing apparatus 10 executes a process (a process of generating an "utterance collection list"). Further, the display information generation unit 182 updates the display data on the display unit as illustrated in Fig. 31.

As illustrated in Fig. 31, the display unit displays an utterance collection list 261 in which a plurality of utterances is collected and listed.

The "utterance collection list" 261 of Fig. 31 is
a list in which the following two user utterances are collected:
the user utterance = "Play Happy Birthday."; and
the user utterance = "Play a movie in which the song is used.".

The "utterance collection list" is generated in the learning processing unit 165.

In response to the user utterance = "Remember this operation.",
the learning processing unit 165 generates an utterance collection list in which the following two user utterances are collected as a list, and stores the list in the storage unit 170 as a piece of learning data:
(1) "Play Happy Birthday."; and
(2) "Play a movie in which the song is used.".

The user can securely execute the same series of processes later by using the utterance collection list.

The process described with reference to Figs. 28 to 31 is
a processing example in which it is confirmed that, between the following two user utterances, the second user utterance includes a demonstrative "the" for the first user utterance:
the first user utterance: "Play Happy Birthday."; and
the second user utterance: "Play a movie in which the song is used.", and
it is determined that those two user utterances have a strong relationship, and, as a result of the determination, an utterance collection list is generated.

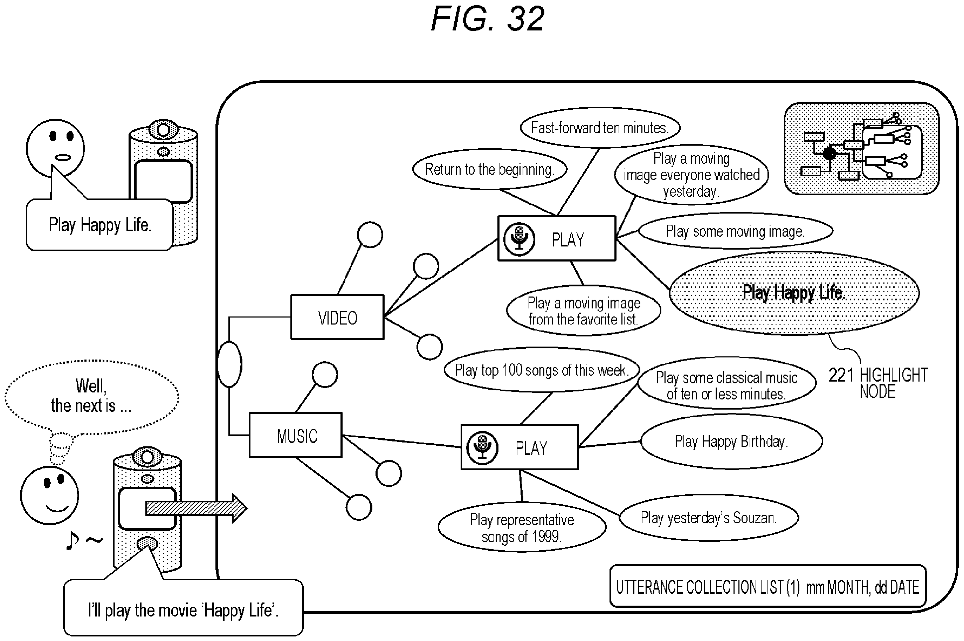

Next, a processing example in which an utterance collection list is generated in a case where the order of the two user utterances is different, i.e., in a case where a request to play a movie is made first and thereafter a request to play a song used in the movie is made will be described with reference to Fig. 32 and subsequent drawings.

First, as illustrated in Fig. 32, the user makes the following user utterance.

User utterance = "Play Happy Life."

The voice analysis unit 161 of the information processing apparatus 10 performs voice recognition and semantic analysis of the user utterance, and grasps that the user intent is a "request to play the movie Happy Life".

On the basis of this user utterance analysis information, the information processing apparatus 10 executes a process (of playing the movie Happy Life). Further, the display information generation unit 182 updates the display data on the display unit as illustrated in Fig. 32.

In the display data of Fig. 32,
the following node is highlighted as the highlight node 221:
"Play Happy Life.", which is one of the acceptable utterance display nodes 202.

Further, the output voice generation unit 181 of the information processing apparatus 10 generates the following system response and outputs the system response via the voice output unit 121.

System response = "I'll play the movie Happy Life' ."

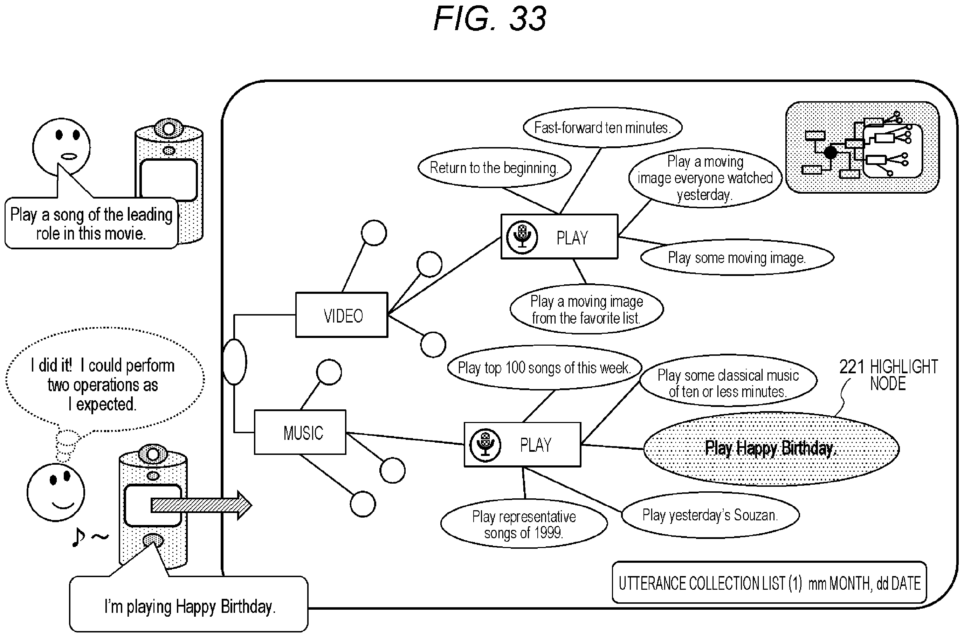

Then, as illustrated in Fig. 33, the user makes the following user utterance.

User utterance = "Play a song of the leading role in this movie."

First, the image analysis unit 162 of the information processing apparatus 10 analyzes line-of-sight information of the user and confirms that the user is watching the movie Happy Life. Further, the voice analysis unit 161 performs voice recognition and semantic analysis of the user utterance, and grasps that the user intent is a "request to play a song of the leading role in the movie Happy Life".

On the basis of this user utterance analysis information, the information processing apparatus 10 executes a process (of playing a song of the leading role in the movie Happy Life = Happy Birthday). Further, the display information generation unit 182 updates the display data on the display unit as illustrated in Fig. 33.

In the display data of Fig. 33,
the following node is highlighted as the highlight node 221:
"Play Happy Birthday.", which is one of the acceptable utterance display nodes 202.

Further, the output voice generation unit 181 of the information processing apparatus 10 generates the following system response and outputs the system response via the voice output unit 121.

System response = "I'm playing Happy Birthday."

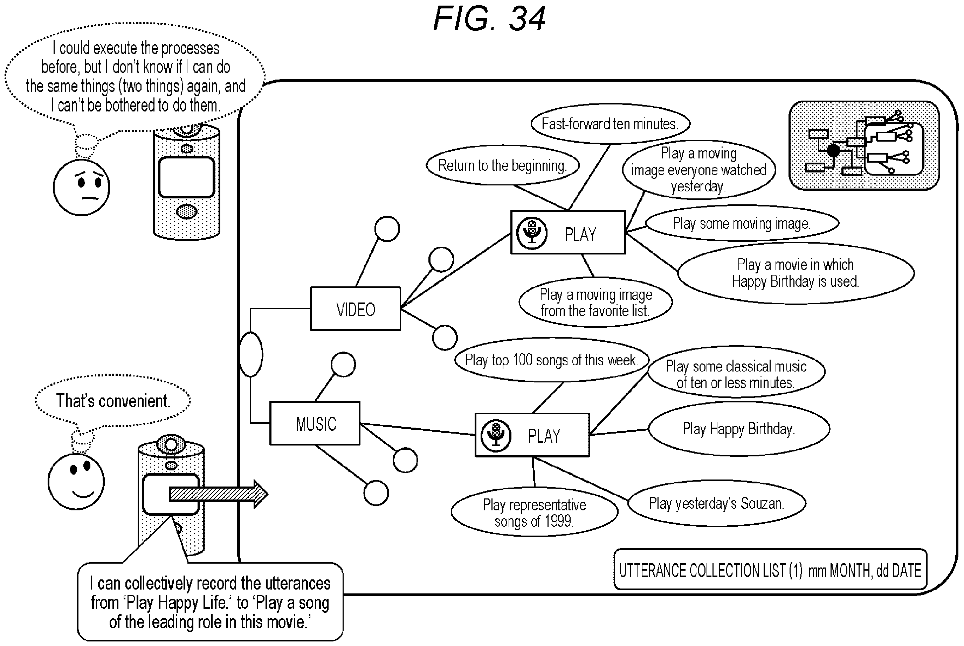

Further, in Fig. 34, the learning processing unit 165 of the information processing apparatus 10 verifies a history of the user utterances.

User utterance = "Play Happy Life."

User utterance = "Play a song of the leading role in this movie."

The learning processing unit 165 confirms that, between those two user utterances, the second user utterance includes a demonstrative "this" for the first user utterance.

Further, the learning processing unit 165 confirms that the user is watching the movie Happy Life on the basis of the analysis result by the image analysis unit 162, and determines that the above two user utterances have a strong relationship.

On the basis of the determination of the relationship, the learning processing unit 165 determines that an utterance collection list including the two user utterances should be generated.

As illustrated in Fig. 34, the information processing apparatus 10 outputs the following system utterance even if there is no explicit request from the user.

System utterance = "I can collectively record the utterances from 'Play Happy Life.' to 'Play a song of the leading role in this movie.'"

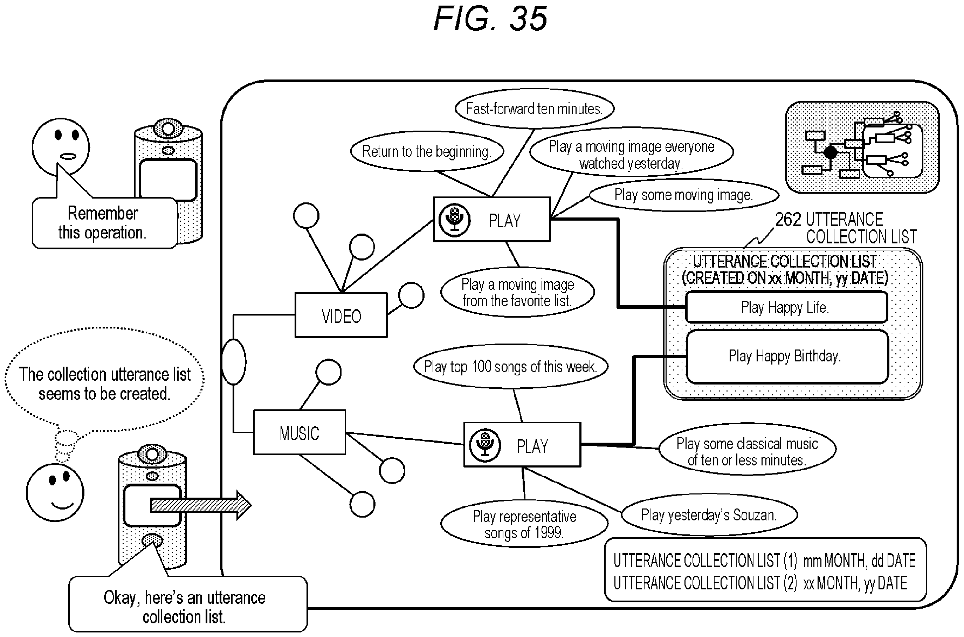

Next, description will be made with reference to Fig. 35.

As illustrated in Fig. 35, the user makes the following user utterance in response to the system utterance.

User utterance = "Remember this operation."

The voice analysis unit 161 of the information processing apparatus 10 performs voice recognition and semantic analysis of the user utterance. On the basis of the analysis result, the information processing apparatus 10 executes a process (a process of generating an "utterance collection list"). Further, the display information generation unit 182 updates the display data on the display unit as illustrated in Fig. 35.

As illustrated in Fig. 35, the display unit displays an utterance collection list 262 in which a plurality of utterances is collected and listed.

The "utterance collection list" 262 of Fig. 35 is a list in which the following two user utterances are collected:
the user utterance = "Play Happy Life."; and
the user utterance = "Play Happy Birthday.".

The "utterance collection list" is generated in the learning processing unit 165.

In response to the user utterance = "Remember this operation.",
the learning processing unit 165 generates an utterance collection list in which the following two user utterances are collected as a list, and stores the list in the storage unit 170 as a piece of learning data:
(1) "Play Happy Birthday."; and
(2) "Play a movie in which the song is used.".

The user can securely execute the same series of processes later by using this utterance collection list.

As described above, the learning processing unit 165 of the information processing apparatus 10 of the present disclosure generates an utterance collection list in accordance with various conditions.

Execution examples of a process in which the learning processing unit 165 generates an utterance collection list and stores the utterance collection list in the storage unit 170 are, for example, as follows.
(1) The learning processing unit 165 inquires of the user whether or not to generate an utterance collection list, generates an utterance collection list in a case where the user agrees, and stores the utterance collection list in the storage unit 170.
(2) In a case where the learning processing unit 165 determines that a plurality of processes corresponding to a plurality of user utterances has been successfully executed, the learning processing unit 165 generates an utterance collection list and stores the utterance collection list in the storage unit 170.
(3) In a case where a combination of a plurality of user utterances is equal to or larger than a predetermined threshold number of times, the learning processing unit 165 generates an utterance collection list and stores the utterance collection list in the storage unit 170.
   For example, in a case where the threshold is set to three times, and a combination of the following two user utterances:
   the user utterance = "Play the favorite list."; and
   the user utterance = "Show a comedy moving image.".
   is input three times, the learning processing unit 165 generates an utterance collection list including the combination of the above two utterances and stores the utterance collection list in the storage unit 170.
(4) The learning processing unit 165 analyzes presence or absence of a demonstrative indicating a relationship between utterances included in a plurality of user utterances, generates an utterance collection list on the basis of the analysis result, and stores the utterance collection list in the storage unit 170.
   This corresponds to the processing example described above with reference to Figs. 28 to 31.
(5) The learning processing unit 165 analyzes a state of the user with respect to a process executed by the information processing apparatus 10 in response to a user utterance, generates an utterance collection list on the basis of the analysis result, and stores the utterance collection list in the storage unit 170.
   As described above, the voice analysis unit 161, the image analysis unit 162, the sensor information analysis unit 163, and the user state estimation unit 164 of the input data analysis unit 160 estimate a state of the user (whether or not the user is satisfied, or the like) on the basis of the user utterance, an image, sensor information, and the like, and outputs this estimation information to the learning processing unit 165. The learning processing unit 165 performs a process such as generation, updating, or discarding of learning data on the basis of the information.
   For example, in a case where it is estimated that the user is satisfied, the learning processing unit 165 determines that the grasp of the intent and the execution of the process in response to the user utterance have been correctly performed, generates and updates learning data, and stores the learning data in the storage unit 170.
   In a case where it is estimated that the user is not satisfied, the learning processing unit 165 determines that the grasp of the intent and the execution of the process in response to the user utterance have not been correctly performed, and does not generate or update learning data. Alternatively, for example, the learning processing unit 165 discards the generated learning data.
(6) The learning processing unit 165 selects user utterances to be collected in accordance with context information, generates an utterance collection list, and stores the utterance collection list in the storage unit 170.

This is an example in which a process such as generation, updating, or discarding of learning data is performed on the basis of, for example, context information indicating a state of the user obtained from analysis results by the voice analysis unit 161, the image analysis unit 162, and the sensor information analysis unit 163 of the input data analysis unit 160, which is similar to the above example.

For example, the learning processing unit 165 selects only processes estimated to be required by the user in accordance with a state of the user, such as a state in which the user is cooking, a state in which the user is playing a game, and a state in which the user is listening to music, generates an utterance collection list, and stores the utterance collection list in the storage unit 170.

Note that the context information is not limited to behavior information of the user, and can be various pieces of environmental information such as time information, weather information, and position information.

For example, in a case where a time slot is daytime, the learning processing unit 165 generates a list including only user utterances corresponding to requests for processes that are likely to be executed in the daytime.

In a case where a time slot is night, the learning processing unit 165 generates a list including only user utterances corresponding to requests for processes that are likely to be executed at night, for example.

### [5. Sequences of processes executed by information processing apparatus]

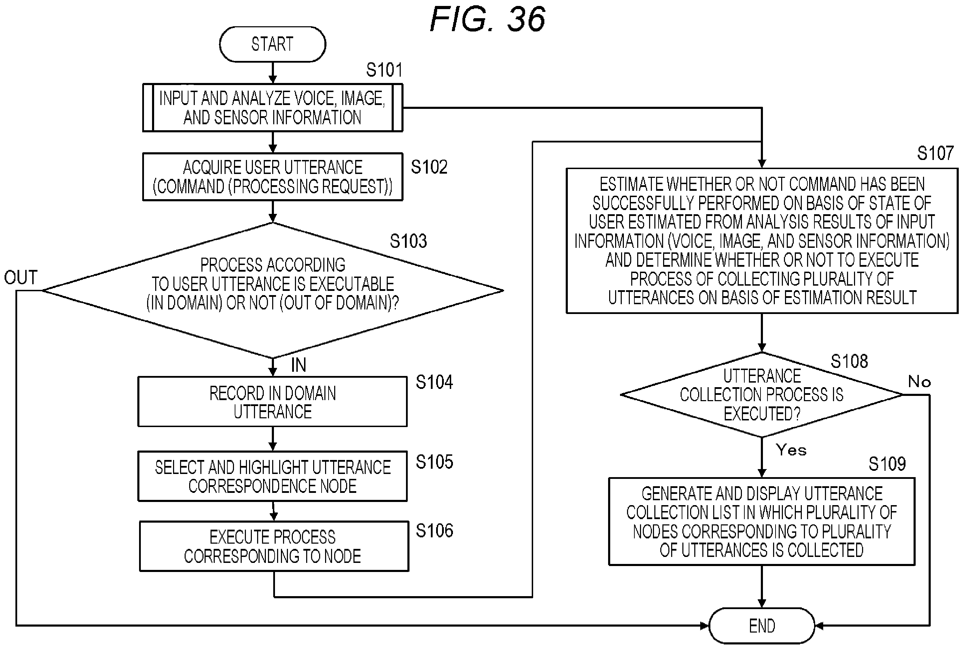

Next, sequences of processes executed by the information processing apparatus 10 will be described with reference to flowcharts in Fig. 36 and subsequent drawings.

The processes according to the flowcharts in Fig. 36 and subsequent drawings are executed in accordance with, for example, programs stored in the storage unit of the information processing apparatus 10. For example, the processes are executable as program execution processes by a processor having a program execution function, such as a CPU.

First, an overall sequence of a process executed by the information processing apparatus 10 will be described with reference to the flowchart of Fig. 36.

Processes in respective steps in a flow of Fig. 36 will be described.

### (Step S101)

First, in step S101, the information processing apparatus 10 inputs and analyzes voice, an image, and sensor information.

This process is a process executed by the input unit 110 and the input data analysis unit 160 of the information processing apparatus 10 of Fig. 3.

In step S101, voice recognition and semantic analysis of user utterance voice are executed to acquire the intent of the user utterance, and a state of the user (whether or not user is satisfied, or the like) based on the user utterance voice, the image, the sensor information, and the like is further acquired.

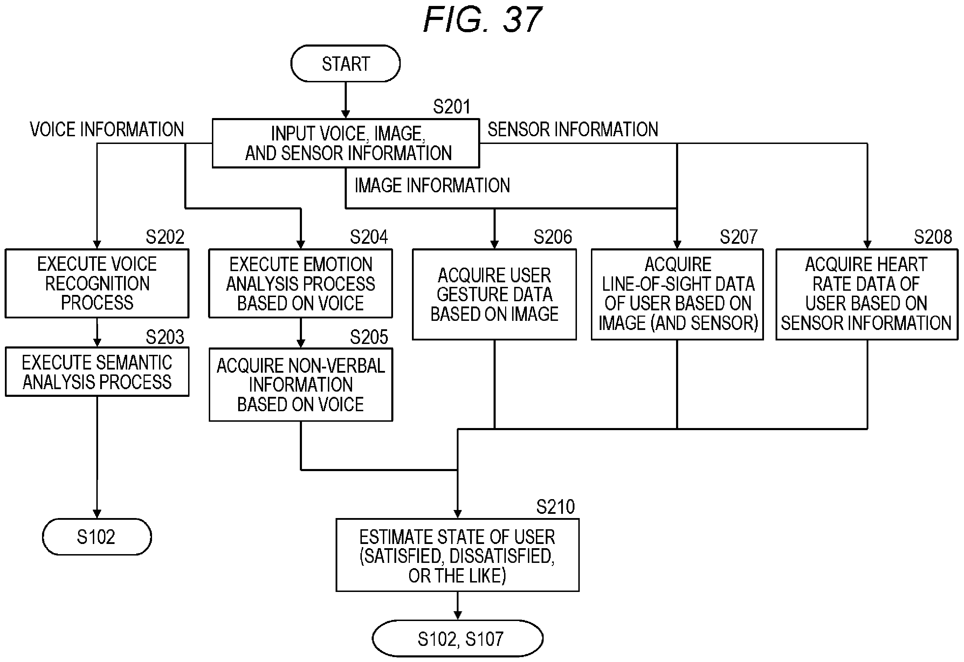

Details of the process will be described later with reference to a flow in Fig. 37.

### (Steps S102 to S103)

Then, in steps S102 to S103, the information processing apparatus 10 analyzes contents of the user utterance (command (processing request)), and determines whether a process corresponding to the user utterance is executable (in domein) or not (out of domein: OOD).

In a case where the process is not executable (out of domein (OOD), the process is terminated.

Note that, at this time, the user may be notified that the process cannot be performed, or may be given a system response requesting restatement.

Meanwhile, in a case where it is determined that the process corresponding to the user utterance is executable (in domein), the process proceeds to step S104.

### (Step S104)

Then, in step S104, the information processing apparatus 10 records the user utterance determined to be executable (in domein) on the storage unit 170.

### (Step S105)

Then, in step S105, the information processing apparatus 10 highlights a node corresponding to the user utterance in a domain correspondence node tree displayed on the image output unit (display unit) 122.

For example, this is the process of displaying the highlight node 221 described above with reference to Fig. 7.

This process is a process executed by the display information generation unit 182 of the information processing apparatus 10 in Fig. 3.

### (Step S106)

Then, in step S106, the information processing apparatus 10 executes the process corresponding to the user utterance, i.e., the process corresponding to the node highlighted in step S105.

Specifically, for example, in the example of Fig. 7, the user utterance is
the user utterance = "Play the favorite list.",
and thus songs included in the user's favorite list registered in advance are played.

Note that the favorite list and songs to be played are acquired from, for example, a server (a service providing server that provides music content) connected to a network.

### (Steps S107 to S108)

Then, in steps S107 to S108, the information processing apparatus 10 estimates whether or not the process corresponding to the user utterance (command) has been successfully performed on the basis of the state of the user (satisfied, dissatisfied, or the like) estimated from the analysis results of the input information (voice, image, and sensor information), and determines whether or not to execute a process of collecting a plurality of utterances on the basis of the estimation result.

This is a process executed by the learning processing unit 165 of the information processing apparatus 10 in Fig. 3.

That is, the learning processing unit 165 generates an utterance collection list described with reference to Fig. 14 and the like, and stores the utterance collection list in the storage unit 170.

In a case where, for example, the following condition is satisfied: that is,
(1) a plurality of user utterances (commands) is input at intervals within a specified time,
the learning processing unit 165 outputs a system utterance indicating that an "utterance collection list" can be generated, as described with reference to Fig. 13, for example.

Further, in a case where the user agrees as illustrated in Fig. 14, it is determined that an "utterance collection list" is generated (step S108 = Yes), and the process proceeds to step S109.

Meanwhile, in a case where the user does not agree, it is determined that an "utterance collection list" is not generated (step S108 = No), and the process is terminated.

### (Step S109)

In a case where it is determined that an "utterance collection list" is generated in step S108 (step S108 = Yes) and the process proceeds to step S109, the learning processing unit 165 of the information processing apparatus 10 generates an "utterance collection list".

Specifically, this is, for example, the utterance collection list 231 of Fig. 14.

The example of Fig. 14 shows the utterance collection list in which the following four user utterances are collected as a list:
(1) "Play the favorite list.";
(2) "Add *Souzan*.";
(3) "Send an invitation to my friends."; and
(4) "Play a moving image everyone watched yesterday."

The learning processing unit 165 of the information processing apparatus 10 stores the list in the storage unit 170 as a piece of learning data.

In a case where the "utterance collection list" is generated by the learning processing unit 165, as illustrated in Fig. 14, the display information generation unit 182 displays the generated "utterance collection list" on the display unit.

When the user makes an utterance to specify the "utterance collection list" 231 from next time, the user can cause the information processing apparatus to collectively execute a plurality of processes recorded in the specified list.

For example, in a case where the user makes a user utterance included in the "utterance collection list" stored in the storage unit 170, or in a case where the user specifies the "utterance collection list" stored in the storage unit 170 and makes an utterance to request the processes, the information processing apparatus 10 sequentially executes the processes according to the user utterances recorded in the "utterance collection list".

Next, details of the process in step S101 in the flowchart of Fig. 36, i.e.,
details of the process of inputting and analyzing voice, an image, and sensor information will be described with reference to the flowchart of Fig. 37.

This process is a process executed by the input unit 110 and the input data analysis unit 160 of the information processing apparatus 10 of Fig. 3.

In step S101, voice recognition and semantic analysis of user utterance voice are executed to acquire the intent of the user utterance, and a state of the user (whether or not user is satisfied, or the like) based on the user utterance voice, the image, the sensor information, and the like is further acquired.

The input unit 110 includes the voice input unit (microphone) 111, the image input unit (camera) 112, and the sensor 113, and acquires user utterance voice, a user image, and sensor acquisition information (a line of sight, a body temperature, a heart rate, a pulse, and a brain wave, and the like of the user).

The voice analysis unit 161, the image analysis unit 162, the sensor information analysis unit 163, and the user state estimation unit 164 of the input data analysis unit 160 execute analysis of input data.

Processes in respective steps in a flow of Fig. 37 will be described.

### (Step S201)

First, in step S201, the voice input unit (microphone) 111, the image input unit (camera) 112, and the sensor 113 of the input unit 110 acquire user utterance voice, a user image, and sensor acquisition information (a line of sight, a body temperature, a heart rate, a pulse, and a brain wave, and the like of the user).

Voice information acquired by the voice input unit (microphone) 111 is processed in steps S202 and S204.

Image information acquired by the image input unit (camera) 112 is processed in steps S206 and S207.

Sensor information acquired by the sensor 113 is processed in step S208.

Those processes can be executed in parallel.

### (Steps S202 to S203)

Steps S202 to S203 are processes executed by the voice analysis unit 161.

In step S202, for example, the voice analysis unit 161 converts voice data into text data including a plurality of words by the automatic speech recognition (ASR) function.

Further, in step S203, the voice analysis unit 161 executes an utterance semantic analysis process with respect to the text data. For example, the voice analysis unit 161 estimates an intent of the user utterance and an entity that is a meaningful element (significant element) included in the utterance from the text data by applying the natural language understanding function such as natural language understanding (NLU).

The process in step S102 in the flow of Fig. 36 is executed by using a result of this semantic analysis.

### (Steps S204 to S205)

Processes in steps S204 to S205 are processes also executed by the voice analysis unit 161.

The voice analysis unit 161 acquires information (non-verbal information) necessary for a user emotion analysis process based on voice of the user, and outputs the acquired information to the user state estimation unit 164.

The non-verbal information is, for example, information obtained from the voice of the user other than the text data, such as a pitch, a tone, intonation, and trembling of the voice, and is information that can be used to analyze a state of the user such as, for example, an excited state or a nervous state. The information is output to the user state estimation unit 164.

### (Step S206)

A process in step S206 is a process executed by the image analysis unit 162.

The image analysis unit 162 analyzes facial expression, gesture, and the like of the user captured by the image input unit 112, and outputs the analysis result to the user state estimation unit 164.

### (Step S207)

A process in step S207 is a process executed by the image analysis unit 162 or the sensor information analysis unit 163.

The image analysis unit 162 or the sensor information analysis unit 163 analyzes the line of sight of the user on the basis of the user image captured by the image input unit 112 or the sensor information.

Specifically, for example, the image analysis unit 162 or the sensor information analysis unit 163 acquires line-of-sight information and the like for analyzing a degree of attention to a process executed by the information processing apparatus 10, such as whether or not the user is watching a moving image that the information processing apparatus 10 has started to play. The information is output to the user state estimation unit 164.

### (Step S208)

A process in step S208 is a process executed by the sensor information analysis unit 163.

The sensor information analysis unit 163 acquires the information acquired by the sensor 113 (a line of sight, a body temperature, a heart rate, a pulse, a brain wave, and the like of the user), and outputs the acquired information to the user state estimation unit 164.

### (Step S210)

A process in step S210 is a process executed by the user state estimation unit 164.

The user state estimation unit 164 receives input of the following data, estimates a state of the user, and generates the user state estimation information 192 of Fig. 3:
the analysis result by the voice analysis unit 161, i.e., the information (non-verbal information) necessary for the user emotion analysis process based on the voice of the user;
the analysis results by the image analysis unit 162, i.e., analysis information such as facial expression, gesture, and line-of-sight information of the user; and
the analysis results by the sensor information analysis unit 163, i.e., the data such as a line of sight, a body temperature, a heart rate, a pulse, and a brain wave of the user.

The information is used later in the process in step S102 and the process in step S107 in the flow of Fig. 36.

Note that the user state estimation information 192 generated by the user state estimation unit 164 is specifically, for example, information estimating whether or not the user is satisfied, i.e., whether or not the user is satisfied with the process performed on the user utterance by the information processing apparatus.

In a case where it is estimated that the user is satisfied, it is estimated that the process executed by the information processing apparatus in response to the user utterance is correct, i.e., the process has been successfully executed.

The learning processing unit 165 executes a learning process for the user utterance and stores learning data in the storage unit 170. For example, in a case where, when a new user utterance is input and the intent of the user utterance is unknown, the intent is analyzed on the basis of subsequent interaction with the apparatus, the learning processing unit 165 performs a process of generating learning data in which the user utterance is associated with the intent and storing the learning data in the storage unit 170.

By executing such a learning process, accurate grasp of intents of user utterances can be gradually achieved.

Further, the learning processing unit 165 also executes a process of generating an "utterance collection list" in which a plurality of user utterances is collected and storing the utterance collection list in the storage unit 170 in step S107 of Fig. 36 described above.

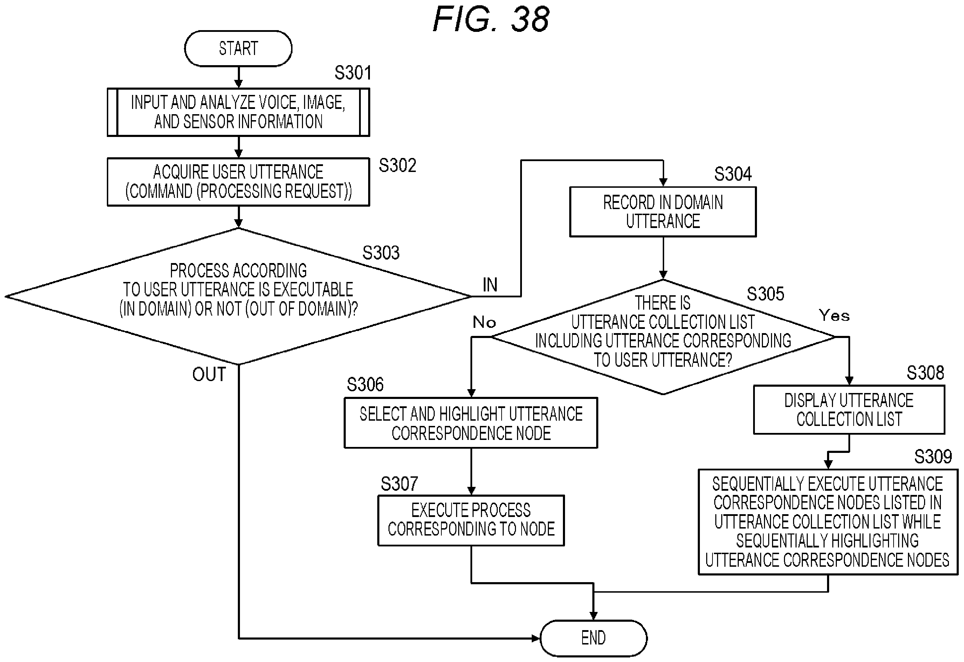

Next, a sequence showing an example of a process of displaying and using the utterance collection list will be described with reference to the flowchart of Fig. 38.

Processes in respective steps of the flowchart in Fig. 38 will be sequentially described.

### (Steps S301 to S304)

Processes in steps S301 to S304 are similar to the processes in steps S101 to S104 described above with reference to the flow of Fig. 36.

That is, first, in step S301, the information processing apparatus 10 inputs and analyzes voice, an image, and sensor information.

This process is the process described with reference to Fig. 37, and is a process of executing voice recognition and semantic analysis of user utterance voice to acquire the intent of the user utterance, and further acquiring a state of the user (whether or not user is satisfied, or the like) based on the user utterance voice, the image, the sensor information, and the like.

Then, in steps S302 to S303, the information processing apparatus 10 analyzes contents of the user utterance (command (processing request)), and determines whether a process corresponding to the user utterance is executable (in domein) or not (out of domein: OOD).

In a case where the process is not executable (out of domein (OOD), the process is terminated.

Meanwhile, in a case where it is determined that the process corresponding to the user utterance is executable (in domein), the process proceeds to step S304.

Then, in step S304, the information processing apparatus 10 records the user utterance determined to be executable (in domein) on the storage unit 170.

### (Step S305)

Then, in step S305, the information processing apparatus determines whether or not there is an utterance collection list including an utterance corresponding to the user utterance.

This process is a process executed by the output information generation unit 180 in Fig. 3.

The output information generation unit 180 makes a search in the storage unit 170 to determine whether or not there is an utterance collection list including an utterance corresponding to the user utterance.

In a case where there is no utterance collection list including an utterance corresponding to the user utterance, the process proceeds to step S306.

Meanwhile, in a case where there is an utterance collection list including an utterance corresponding to the user utterance, the process proceeds to step S308.

### (Steps S306 to S307)

In a case where it is determined in step S305 that there is no utterance collection list including an utterance corresponding to the user utterance, a node corresponding to the user utterance in the domain correspondence node tree displayed on the image output unit (display unit) 122 is highlighted in step S306.

For example, this is the process of displaying the highlight node 221 described above with reference to Fig. 7.

This process is a process executed by the display information generation unit 182 of the information processing apparatus 10 in Fig. 3.

Further, in step S307, a process corresponding to the user utterance, i.e., a process corresponding to the node highlighted in step S306 is executed.

### (Step S308)

Meanwhile, in a case where it is determined in step S305 that there is an utterance collection list including an utterance corresponding to the user utterance, the utterance collection list is displayed on the image output unit (display unit) 122 in step S308.

For example, this is the process of displaying the utterance collection list 231 described above with reference to Fig. 14 and the like.

This process is a process executed by the display information generation unit 182 of the information processing apparatus 10 in Fig. 3.

### (Step S309)

Then, in step S309, processes corresponding to user utterances, i.e., processes corresponding to user utterance correspondence nodes listed in the utterance collection list 231 displayed in step S308 are sequentially executed.

Further, a process of highlighting the currently executed user utterance correspondence node in the displayed utterance collection list 231 is executed.

This process corresponds to the process described above with reference to Figs. 18 to 21.

This process is a process executed by the display information generation unit 182 of the information processing apparatus 10 in Fig. 3.

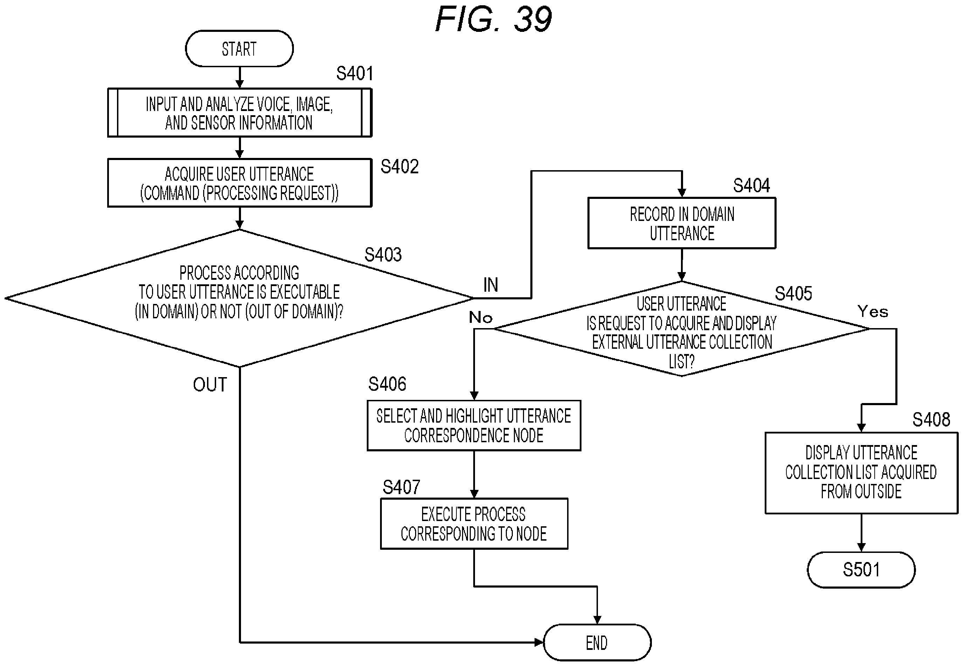

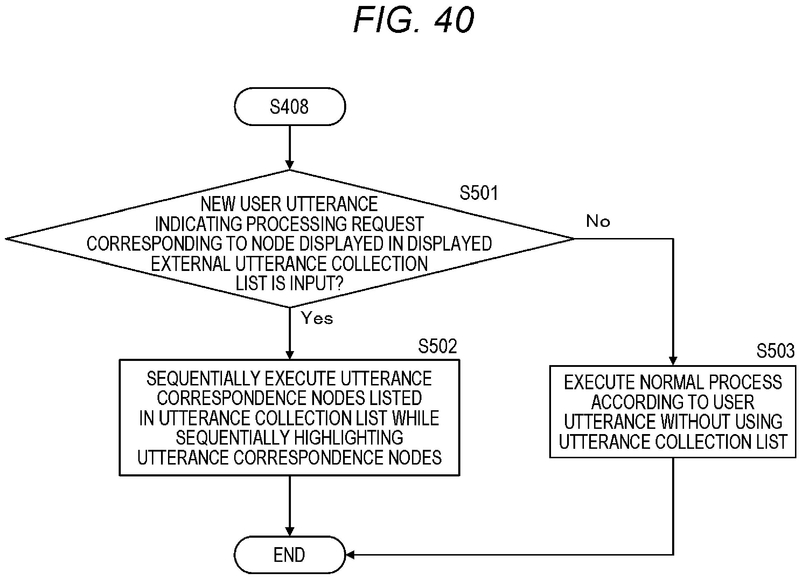

Next, a sequence of a process in which, in a case where there is no utterance collection list created by the user, an external utterance collection list, i.e., another person's utterance collection list, a network public list, a blog public list, or the like described above with reference to Figs. 22 to 24 is used will be described with reference to the flowcharts in Figs. 39 and 40.

Processes in respective steps of the flowcharts in Figs. 39 and 40 will be sequentially described.

### (Steps S401 to S404)

Processes in steps S401 to S404 are similar to the processes in steps S101 to S104 described above with reference to the flow of Fig. 36.

That is, first, in step S401, the information processing apparatus 10 inputs and analyzes voice, an image, and sensor information.

This process is the process described with reference to Fig. 37, and is a process of executing voice recognition and semantic analysis of user utterance voice to acquire the intent of the user utterance, and further acquiring a state of the user (whether or not user is satisfied, or the like) based on the user utterance voice, the image, the sensor information, and the like.

Then, in steps S402 to S403, the information processing apparatus 10 analyzes contents of the user utterance (command (processing request)), and determines whether a process corresponding to the user utterance is executable (in domein) or not (out of domein: OOD).

In a case where the process is not executable (out of domein (OOD), the process is terminated.

Meanwhile, in a case where it is determined that the process corresponding to the user utterance is executable (in domein), the process proceeds to step S404.

Then, in step S404, the information processing apparatus 10 records the user utterance determined to be executable (in domein) on the storage unit 170.

### (Step S405)

Then, in step S405, the information processing apparatus determines whether or not the user utterance is a request to acquire and display an external utterance collection list.

In a case where the user utterance is not a request to acquire and display an external utterance collection list, the process proceeds to step S406.

Meanwhile, in a case where the user utterance is a request to acquire and display an external utterance collection list, the process proceeds to step S408.

### (Steps S4306 to S407)

In a case where the user utterance is not a request to acquire and display an external utterance collection list in step S405, a node corresponding to the user utterance in the domain correspondence node tree displayed on the image output unit (display unit) 122 is highlighted in step S406.

For example, this is the process of displaying the highlight node 221 described above with reference to Fig. 7.

This process is a process executed by the display information generation unit 182 of the information processing apparatus 10 in Fig. 3.

Further, in step S407, a process corresponding to the user utterance, i.e., a process corresponding to the node highlighted in step S406 is executed.

### (Step S408)

Meanwhile, in a case where the user utterance is a request to acquire and display an external utterance collection list in step S405, an utterance collection list acquired from outside is displayed on the image output unit (display unit) 122 in step S408.

For example, this is the process of displaying the utterance collection list described above with reference to Figs. 22 to 24.

This process is a process executed by the display information generation unit 182 of the information processing apparatus 10 in Fig. 3.

### (Step S501)

Then, in step S501, it is determined whether or not a new user utterance indicating a processing request corresponding to a node displayed in the displayed external utterance collection list has been input.

This process is a process executed by the input data analysis unit 160 of the information processing apparatus 10.

In a case where it is determined that a new user utterance indicating a processing request corresponding to a node displayed in the displayed external utterance collection list has been input, the process proceeds to step S502.

Meanwhile, in a case where it is determined that a new user utterance indicating a processing request corresponding to a node displayed in the displayed external utterance collection list has not been input, the process proceeds to step S503.

### (Step S502)

In a case where it is determined that a new user utterance indicating a processing request corresponding to a node displayed in the external utterance collection list displayed in step S501 has been input, the process proceeds to step S502. In step S502, processes corresponding to user utterance correspondence nodes listed in the utterance collection list are sequentially executed.

Further, a process of highlighting the currently executed user utterance correspondence node in the displayed utterance collection list is executed.

This process is a process executed by the display information generation unit 182 of the information processing apparatus 10 in Fig. 3.

### (Step S503)

Meanwhile, in a case where it is determined that a new user utterance indicating a processing request corresponding to a node displayed in the external utterance collection list displayed in step S501 has not been input, the process proceeds to step S503. In step S503, a normal process according to the user utterance is executed without using the utterance collection list.

### [6. Configuration examples of information processing apparatus and information processing system]

A plurality of embodiments has been described, and various processing functions described in those embodiments, for example, processing functions of the respective components of the information processing apparatus 10 of Fig. 3 can be all configured in a single apparatus, for example, an apparatus possessed by the user, such as an agent device, a smartphone, or a PC. Alternatively, part of the processing functions can also be executed in a server or the like.

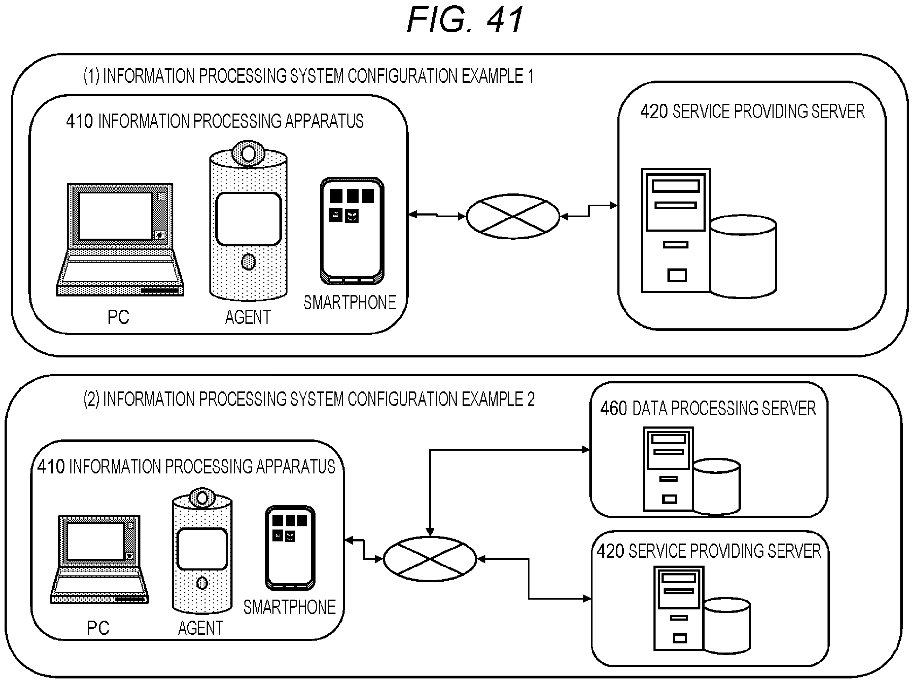

Fig. 41 illustrates system configuration examples.

An information processing system configuration example 1 of Fig. 41(1) is an example in which almost all functions of the information processing apparatus of Fig. 3 are configured in a single apparatus, for example, an information processing apparatus 410 possessed by the user, which is a user terminal such as a smartphone, a PC, or an agent device having a voice input/output function and an image input/output function.

The information processing apparatus 410 corresponding to the user terminal communicates with a service providing server 420 only when, for example, the information processing apparatus 410 uses an external service to generate a response sentence.

The service providing server 420 is, for example, a music providing server, a content providing server for movies or the like, a game server, a weather information providing server, a traffic information providing server, a medical information providing server, a sightseeing information providing server, or the like, and includes a group of servers that can provide information necessary for executing a process in response to a user utterance and generating a response.

Meanwhile, an information processing system configuration example 2 of Fig. 41(2) is a system example in which part of the functions of the information processing apparatus of Fig. 3 is configured in the information processing apparatus 410 possessed by the user, which is a user terminal such as a smartphone, a PC, or an agent device, and part of the functions is executed in the data processing server 460 that can communicate with the information processing apparatus.

For example, it is possible to adopt a configuration in which only the input unit 110 and the output unit 120 in the apparatus of Fig. 3 are provided in the information processing apparatus 410 serving as the user terminal, and all the other functions are executed in the server.

Note that it is possible to variously set a mode in which the functions are divided into the user terminal and the server. Further, a single function can be executed by both.

### [7. Hardware configuration example of information processing apparatus]

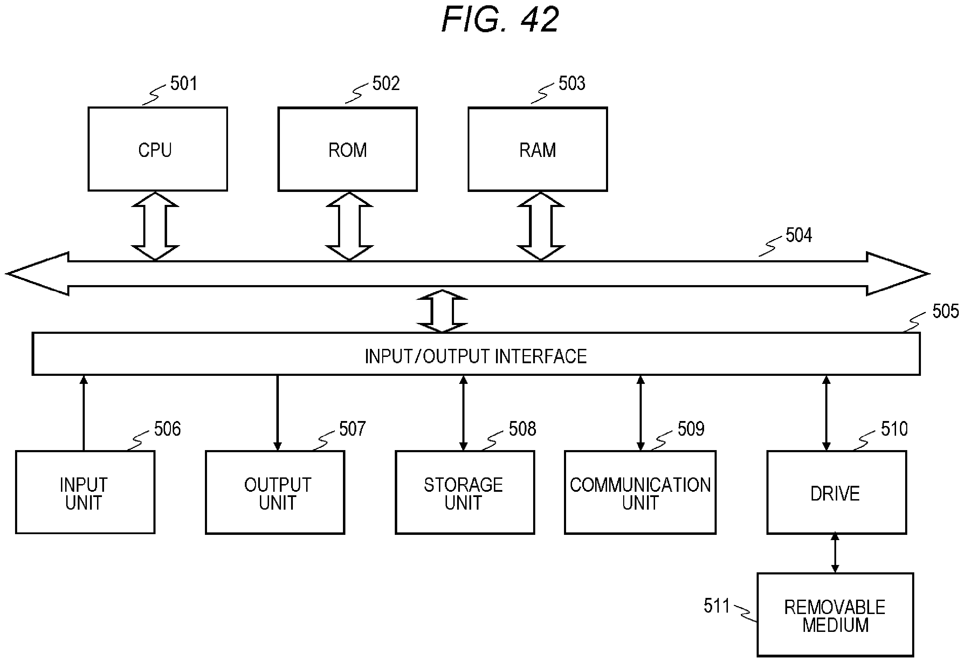

Next, a hardware configuration example of the information processing apparatus will be described with reference to Fig. 42.

Hardware described with reference to Fig. 42 is a hardware configuration example of the information processing apparatus described above with reference to Fig. 3, and is also an example of a hardware configuration of an information processing apparatus forming the data processing server 460 described with reference to Fig. 41.

A central processing unit (CPU) 501 functions as a control unit or a data processing unit that executes various processes in accordance with programs stored in a read only memory (ROM) 502 or a storage unit 508. The CPU 501 executes, for example, the processes according to the sequences described in the above embodiment. A random access memory (RAM) 503 stores programs executed by the CPU 501, data, and the like. The CPU 501, the ROM 502, and the RAM 503 are connected to each other by a bus 504.

The CPU 501 is connected to an input/output interface 505 via the bus 504. The input/output interface 505 is connected to an input unit 506 including various switches, a keyboard, a mouse, a microphone, a sensor, and the like, and is also connected to an output unit 507 including a display, a speaker, and the like. The CPU 501 executes various processes in response to commands input from the input unit 506, and outputs processing results to, for example, the output unit 507.

The storage unit 508 connected to the input/output interface 505 includes, for example, a hard disk, and the like, and stores programs executed by the CPU 501 and various kinds of data. A communication unit 509 functions as a transmission/reception unit for Wi-Fi communication, Bluetooth (registered trademark) (BT) communication, and other data communication via a network such as the Internet or a local area network, and communicates with an external device.

A drive 510 connected to the input/output interface 505 drives a removable medium 511 such as a magnetic disk, an optical disk, a magneto-optical disk, or a semiconductor memory such as a memory card to record or read data.

### [8. Summary of configurations of present disclosure]

Hereinabove, the embodiments of the present disclosure have been described in detail by referring to specific embodiments. However, it is obvious that those skilled in the art can make modifications and substitutions of the embodiments, without departing from the scope of the present disclosure. That is, the present invention has been described in the form of illustration, and should not be interpreted in a limited manner. The claims should be taken into consideration in order to determine the gist of the present disclosure.

Note that the technology disclosed in this specification can be configured as follows.
(1) An information processing apparatus including
   a learning processing unit configured to perform a learning process of a user utterance, in which
   the learning processing unit generates an utterance collection list in which a plurality of user utterances corresponding to a plurality of different processing requests is collected.
(2) The information processing apparatus according to (1), in which
   the information processing apparatus further displays the utterance collection list on a display unit.
(3) The information processing apparatus according to (1) or (2), in which
   the user utterances recorded in the utterance collection list are user utterances corresponding to commands that are processing requests made by a user to the information processing apparatus.
(4) The information processing apparatus according to any one of (1) to (3), in which
   the learning processing unit inquires of a user whether or not to generate the utterance collection list, generates the utterance collection list in a case where the user agrees, and stores the utterance collection list in a storage unit.
(5) The information processing apparatus according to any one of (1) to (4), in which
   in a case where the learning processing unit determines that a plurality of processes corresponding to the plurality of user utterances has been successfully executed, the learning processing unit generates the utterance collection list and stores the utterance collection list in a storage unit.
(6) The information processing apparatus according to any one of (1) to (4), in which
   in a case where a combination of the plurality of user utterances is equal to or larger than a predetermined threshold number of times, the learning processing unit generates the utterance collection list and stores the utterance collection list in a storage unit.
(7) The information processing apparatus according to any one of (1) to (4), in which
   the learning processing unit analyzes presence or absence of a demonstrative indicating a relationship between utterances included in the plurality of user utterances, generates the utterance collection list on the basis of a result of the analysis, and stores the utterance collection list in a storage unit.
(8) The information processing apparatus according to any one of (1) to (4), in which
   the learning processing unit analyzes a state of a user with respect to a process executed by the information processing apparatus in response to the user utterance, generates the utterance collection list on the basis of a result of the analysis, and stores the utterance collection list in a storage unit.
(9) The information processing apparatus according to any one of (1) to (4), in which
   in a case where the learning processing unit receives input of user state information and the user state information is information indicating that a user is satisfied, the learning processing unit generates the utterance collection list and stores the utterance collection list in a storage unit.
(10) The information processing apparatus according to (9), in which
   the user state information is information indicating a user satisfaction state and acquired on the basis of at least one of the following pieces of information:
   non-verbal information based on the user utterance and generated by a voice analysis unit;
   image analysis information based on a user image and generated by an image analysis unit; or
   sensor information analysis information generated by a sensor information analysis unit.
(11) The information processing apparatus according to any one of (1) to (10), further including
   a display information generation unit configured to execute a process of highlighting an utterance correspondence node that is currently executed by the information processing apparatus among a plurality of utterance correspondence nodes included in the utterance collection list displayed on a display unit.
(12) The information processing apparatus according to any one of (1) to (11), in which
   the information processing apparatus further acquires an external utterance collection list acquirable by the information processing apparatus and displays the external utterance collection list on a display unit.
(13) The information processing apparatus according to any one of (1) to (12), in which
   the learning processing unit selects user utterances to be collected in accordance with context information, and generates the utterance collection list.
(14) An information processing system including a user terminal and a data processing server, in which:
   the user terminal includes
   a voice input unit configured to input a user utterance;
   the data processing server includes
   a learning processing unit configured to perform a learning process of the user utterance received from the user terminal; and
   the learning processing unit generates an utterance collection list in which a plurality of user utterances corresponding to a plurality of different processing requests is collected.
(15) The information processing system according to (14), in which
   the user terminal displays the utterance collection list on a display unit.
(16) An information processing method executed in an information processing apparatus, in which:
   the information processing apparatus includes a learning processing unit configured to perform a learning process of a user utterance; and
   the learning processing unit generates an utterance collection list in which a plurality of user utterances corresponding to a plurality of different processing requests is collected.
(17) An information processing method executed in an information processing system including a user terminal and a data processing server, in which:
   the user terminal executes a voice input process of inputting a user utterance;
   the data processing server executes a learning process of the user utterance received from the user terminal; and
   an utterance collection list in which a plurality of user utterances corresponding to a plurality of different processing requests is collected is generated in the learning process.
(18) A program for causing an information processing apparatus to execute information processing, in which:
   the information processing apparatus includes a learning processing unit configured to perform a learning process of a user utterance; and
   the program causes the learning processing unit to generate an utterance collection list in which a plurality of user utterances corresponding to a plurality of different processing requests is collected.

Further, the series of processes described in the specification can be executed by hardware, software, or a combined configuration of both. In a case where the processes are executed by software, the processes can be executed by installing a program in which the processing sequence is recorded in a memory inside a computer incorporated into dedicated hardware and executing the program, or by installing a program in a general purpose computer that can execute various processes and executing the program. For example, the program can be recorded on a recording medium in advance. The program can be installed in the computer from the recording medium, or can also be received via a network such as a local area network (LAN) or the Internet and be installed in a recording medium such as a built-in hard disk.

Note that the various processes described in the specification not only are executed in time series in accordance with the description, but also are executed in parallel or individually depending on a processing capacity of an apparatus that executes the processes or as necessary. Further, in this specification, a system is a logical set configuration of a plurality of apparatuses, and is not limited to a system in which apparatuses having respective configurations are in the same housing.

### INDUSTRIAL APPLICABILITY

As described above, according to a configuration of an embodiment of the present disclosure, an apparatus and a method capable of accurately and repeatedly executing processes based on a plurality of user utterances are realized by generating and using an utterance collection list in which the plurality of user utterances is collected.

Specifically, for example, a learning processing unit generates an utterance collection list in which a plurality of user utterances corresponding to a plurality of different processing requests is collected. Further, the generated utterance collection list is displayed on a display unit. The learning processing unit generates an utterance collection list and stores the utterance collection list in a storage unit in a case where a user agrees, a case where it is determined that a plurality of processes corresponding to the user utterances has been successfully executed, a case where a combination of the plurality of user utterances is equal to or larger than a predetermined threshold number of times, a case where it is estimated that the user is satisfied, or other cases.

With this configuration, an apparatus and a method capable of accurately and repeatedly executing processes based on a plurality of user utterances are realized by generating and using an utterance collection list in which the plurality of user utterances is collected.

### REFERENCE SIGNS LIST

- 10: Information processing apparatus
- 11: Camera
- 12: Microphone
- 13: Display unit
- 14: Speaker
- 20: Server
- 30: External device
- 110: Input unit
- 111: Voice input unit
- 112: Image input unit
- 113: Sensor
- 120: Output unit
- 121: Voice output unit
- 122: Image output unit
- 150: Data processing unit
- 160: Input data analysis unit
- 161: Voice analysis unit
- 162: Image analysis unit
- 163: Sensor information analysis unit
- 164: User state estimation unit
- 165: Learning processing unit
- 170: Storage unit
- 180: Output information generation unit
- 181: Output voice generation unit
- 182: Display information generation unit
- 200: Domain correspondence node tree
- 201: Domain
- 202: Acceptable utterance display node
- 211: Display area identification information
- 212: Registered utterance collection list information
- 221: Highlight node
- 222: Guide information
- 231: Utterance collection list
- 232: Another user's public utterance collection list
- 233: Network public utterance collection list
- 234: Blog public utterance collection list
- 241: Utterance collection list correspondence node
- 242: Utterance collection list
- 261: Utterance collection list
- 420: Service providing server
- 460: Data processing server
- 501: CPU
- 502: ROM
- 503: RAM
- 504: Bus
- 505: Input/output interface
- 506: Input unit
- 507: Output unit
- 508: Storage unit
- 509: Communication unit
- 510: Drive
- 511: Removable medium

## Claims

1. An information processing apparatus comprising
a learning processing unit configured to perform a learning process of a user utterance, wherein
the learning processing unit generates an utterance collection list in which a plurality of user utterances corresponding to a plurality of different processing requests is collected.

2. The information processing apparatus according to claim 1, wherein
the information processing apparatus further displays the utterance collection list on a display unit.

3. The information processing apparatus according to claim 1, wherein
the user utterances recorded in the utterance collection list are user utterances corresponding to commands that are processing requests made by a user to the information processing apparatus.

4. The information processing apparatus according to claim 1, wherein
the learning processing unit inquires of a user whether or not to generate the utterance collection list, generates the utterance collection list in a case where the user agrees, and stores the utterance collection list in a storage unit.

5. The information processing apparatus according to claim 1, wherein
in a case where the learning processing unit determines that a plurality of processes corresponding to the plurality of user utterances has been successfully executed, the learning processing unit generates the utterance collection list and stores the utterance collection list in a storage unit.

6. The information processing apparatus according to claim 1, wherein
in a case where a combination of the plurality of user utterances is equal to or larger than a predetermined threshold number of times, the learning processing unit generates the utterance collection list and stores the utterance collection list in a storage unit.

7. The information processing apparatus according to claim 1, wherein
the learning processing unit analyzes presence or absence of a demonstrative indicating a relationship between utterances included in the plurality of user utterances, generates the utterance collection list on a basis of a result of the analysis, and stores the utterance collection list in a storage unit.

8. The information processing apparatus according to claim 1, wherein
the learning processing unit analyzes a state of a user with respect to a process executed by the information processing apparatus in response to the user utterance, generates the utterance collection list on a basis of a result of the analysis, and stores the utterance collection list in a storage unit.

9. The information processing apparatus according to claim 1, wherein
in a case where the learning processing unit receives input of user state information and the user state information is information indicating that a user is satisfied, the learning processing unit generates the utterance collection list and stores the utterance collection list in a storage unit.

10. The information processing apparatus according to claim 9, wherein
the user state information is information indicating a user satisfaction state and acquired on a basis of at least one of the following pieces of information:
non-verbal information based on the user utterance and generated by a voice analysis unit;
image analysis information based on a user image and generated by an image analysis unit; or
sensor information analysis information generated by a sensor information analysis unit.

11. The information processing apparatus according to claim 1, further comprising
a display information generation unit configured to execute a process of highlighting an utterance correspondence node that is currently executed by the information processing apparatus among a plurality of utterance correspondence nodes included in the utterance collection list displayed on a display unit.

12. The information processing apparatus according to claim 1, wherein
the information processing apparatus further acquires an external utterance collection list acquirable by the information processing apparatus and displays the external utterance collection list on a display unit.

13. The information processing apparatus according to claim 1, wherein
the learning processing unit selects user utterances to be collected in accordance with context information, and generates the utterance collection list.

14. An information processing system including a user terminal and a data processing server, wherein:
the user terminal includes
a voice input unit configured to input a user utterance;
the data processing server includes
a learning processing unit configured to perform a learning process of the user utterance received from the user terminal; and
the learning processing unit generates an utterance collection list in which a plurality of user utterances corresponding to a plurality of different processing requests is collected.

15. The information processing system according to claim 14, wherein
the user terminal displays the utterance collection list on a display unit.

16. An information processing method executed in an information processing apparatus, wherein:
the information processing apparatus includes a learning processing unit configured to perform a learning process of a user utterance; and
the learning processing unit generates an utterance collection list in which a plurality of user utterances corresponding to a plurality of different processing requests is collected.

17. An information processing method executed in an information processing system including a user terminal and a data processing server, wherein:
the user terminal executes a voice input process of inputting a user utterance;
the data processing server executes a learning process of the user utterance received from the user terminal; and
an utterance collection list in which a plurality of user utterances corresponding to a plurality of different processing requests is collected is generated in the learning process.

18. A program for causing an information processing apparatus to execute information processing, wherein:
the information processing apparatus includes a learning processing unit configured to perform a learning process of a user utterance; and
the program causes the learning processing unit to generate an utterance collection list in which a plurality of user utterances corresponding to a plurality of different processing requests is collected.
